(19) **Europäisches Patentamt / European Patent Office / Office européen des brevets**

(11) **EP 1 926 282 B1**

(12) **EUROPEAN PATENT SPECIFICATION**

(45) Date of publication and mention of the grant of the patent:
**21.11.2012 Bulletin 2012/47**

(51) Int Cl.:
*H04L 29/06* (2006.01)   *H04L 29/14* (2006.01)

(21) Application number: **07121775.6**

(22) Date of filing: **13.10.2000**

(54) **Method and system for compressing and decompressing packet headers**

System und Verfahren zum Senden und Empfangen von Paketen

Système et procédé pour la transmission et la réception de paquets

(84) Designated Contracting States:
**AT BE CH CY DE DK ES FI FR GB GR IE IT LI LU MC NL PT SE**

(30) Priority: **14.10.1999 US 159360 P**
**28.03.2000 US 536639**

(43) Date of publication of application:
**28.05.2008 Bulletin 2008/22**

(60) Divisional application:
**10174756.6 / 2 383 953**

(62) Document number(s) of the earlier application(s) in accordance with Art. 76 EPC:
**00970868.6 / 1 221 239**

(73) Proprietor: **Nokia Corporation**
**02150 Espoo (FI)**

(72) Inventors:
• **Le, Khiem**
**Coppell, TX 75019 (US)**
• **Clanton, Christopher**
**Richardson, TX 75082 (US)**
• **Zheng, Haihong**
**Coppel, TX 75019 (US)**
• **Liu, Zhigang**
**Irving, TX 75063 (US)**

(74) Representative: **Derry, Paul Stefan et al**
**Venner Shipley LLP**
**200 Aldersgate**
**London EC1A 4HD (GB)**

(56) References cited:
**EP-A- 1 056 259    WO-A-00/79764**

• **CASNER CISCO SYSTEMS V JACOBSON CISCO SYSTEMS S: "Compressing IP/UDP/RTP Headers for Low-Speed Serial Links; rfc2508.txt" IETF STANDARD, INTERNET ENGINEERING TASK FORCE, IETF, CH, 1 February 1999 (1999-02-01), XP015008291 ISSN: 0000-0003**
• **DEGERMARK M ET AL: "LOW-LOSS TCP/IP HEADER COMPRESSION FOR WIRELESS NETWORKS" WIRELESS NETWORKS, ACM, US, vol. 3, no. 5, 1 October 1997 (1997-10-01), pages 375-387, XP000728935 ISSN: 1022-0038**

**Description**

The present invention relates to compression and decompression of headers in data packet transmissions.

For Internet Protocol (IP) based real-time multimedia, the Real-Time Transfer Protocol (RTP) is predominantly used on top of the User Datagram Protocol (UDP/ IP). RTP is described in detail in RFC 1889. The size of the combined IP/UDP/RTP headers is at least 40 bytes for IPv4 and at least 60 bytes for IPv6. A total of 40-60 bytes overhead per packet may be considered heavy in systems (e.g., such as cellular networks) where spectral efficiency is a primary concern. Consequently, a need exists for suitable IP/UDP/RTP header compression mechanisms. A current header compression scheme is described in RFC 2508, by S. Casner, V. Jacobson, "Compressing IP/UDP/RTP Headers for Low Speed Serial Links", Internet Engineering Task Force (IETP), February 1999, and which is able to compress the 40/60 byte IP/UDP/RTP header down to 2 or 4 bytes over point-to-point links. The existing header compression algorithms are based on the observation that most fields of the IP packet headers remain constant in a packet stream during the length of a session. Thus, it is possible to compress the header information by establishing a compression state (the full header information) at the de-compressor and by simply carrying minimal amount of header information from the compressor to the de-compressor.

IP/UDP/RTP header compression schemes, as described for example in RFC 2508, take advantage of the fact that certain information fields carried in the headers either 1.) do not change ('Type 1' header fields) or 2.) change in a fairly predictable way ('Type 2' header fields). Other fields, referred to as 'Type 3' header fields, vary in such a way that they must be transmitted in some form in every packet (i.e. they are not compressible).

Examples of Type 1 header fields are the IP address, UDP port number, RTP SSRC (synchronization source), etc. These fields need only be transmitted to the receiver/decompressor once during the course of a session (as part of the packet(s) transferred at session establishment, for example). Type 1 fields are also called 'unchanging' fields.

Examples of Type 2 header fields are the RTP time stamp, RTP sequence number, and IP ID fields. All have a tendency to increment by some constant amount from packet(n) to packet (n+1). Thus, there is no need for these values to be transmitted within every header. It is only required that the receiver/decompressor be made aware of the constant increment value, hereafter referred to as the first order difference (FOD), associated with each field that exhibits this behavior. Receiver/decompressor utilizes these FODs to regenerate up-to-date Type 2 field values when reconstructing the original header. Type 2 fields are part of 'changing' fields.

It should be emphasized that, on occasion, Type 2 fields will change in some irregular way. Frequency of such events depends on several factors, including the type of media being transmitted (e.g., voice or video), the actual media source (e.g., for voice, behavior may vary from one speaker to another), and the number sessions simultaneously sharing the same IP-address.

An Example of a Type 3 header field is the RTP M-bit (Marker), which indicates the occurrence of some boundary in the media (e.g., end of a video frame). Because the media normally varies in unpredictable ways, this information cannot be truly predicted. Type 3 fields are part of 'changing' fields.

The decompressor maintains decompression context information that contains all the pertinent information related to rebuilding the header. This information is mainly type 1 fields, FOD values, and other information. When packets are lost or corrupted, the decompressor can lose synchronization with the compressor such that it can no longer correctly rebuild packets. Loss of synchronization can occur when packets are dropped or corrupted during transmission between compressor and decompressor.

Given the above, the compressor needs to transmit three different types of headers during the course of a session:

- Full Header (FH): Contains the complete set of all header fields (Types 1 , 2, and 3). This type of header is the least optimal to send due to its large size (e.g., 40 bytes for IPv4). In general, it is desirable to send an FH packet only at the beginning of the session (to establish Type 1 data at the receiver). Transmission of additional FH packets has adverse effects on the efficiency of the compression algorithm. When the compressor transmits FH packets, it is said to be in the 'FH state'.
- First Order (FO): Contains minimal header information (e.g. Type 3 fields), compressor/decompressor specific control fields (specific to the compression algorithm in use), and information describing changes in current FOD fields. An FO packet is basically an SO packet (described below), with additional information that establishes new FOD information for one or more Type 2 fields at the decompressor. If the header compression is being applied to a VoIP (voice over internet protocol) stream, transmission of an FO packet might be triggered by the occurrence of a talk spurt after a silence interval in the voice. Such an event results in some unexpected change in the RTP time stamp value, and a need to update the RTP time stamp at the receiver by a value other than the current FOD. The size of FO packets depends on the number of Type 2 fields whose first order difference changed (and the amount of the absolute value of each change). When the compressor transmits FO packets, it is said to be in the 'FO state'.
- Second Order (SO): A SO packet contains minimal header information (e.g. Type 3 fields), and compressor and decompressor specific control fields. The preferred mode of operation for the compressor and decompressor is transmission and reception of SO packets, due to their minimal size (on the order of just 2 bytes or even less). When the compressor transmits SO packets, it is said to be in the 'SO state'. SO packets are transmitted only if the current header fits the pattern of an FOD.

RFC 2508 is based on the concept that most of the time, the RTP fields that change from one packet to the next, such as the RTP time stamp, can be predicted by linear extrapolation of transmitted SO packets. Essentially the only information that has to be sent is a sequence number, used for error and packet loss detection (as well as a context information ID). When the transmitter determines that linear extrapolation cannot be applied to the current packet with respect to the immediately preceding packet, a FO packet is transmitted. To initiate the session, a FH packet is transmitted. In addition, when the receiver determines that there is packet loss (as detected by a sequence number incrementing by more than 1) the receiver will explicitly request the transmitter to transmit the full header in order to allow a resynchronization.

However, the header compression defined in RFC 2508 is not well suited for certain environments (such as cellular or wireless environments), where bandwidth is at a premium and errors are common. In the RFC 2508 header compression scheme, the RTP time stamp is assumed to have most of the time a linearly increasing pattern. When the header conforms to the pattern, essentially only a short sequence number sent as SO is needed in the compressed header. When the header does not conform to the pattern, the difference between the RTP time stamps of the current header and of the previous one is sent in the FO compressed header.

The additional bandwidth requirement can manifest itself in various ways, depending on the operating environment. For example, in cellular systems it is in general very desirable to limit bandwidth usage as much as possible, as it is a scarce resource.

RFC 2508 suffers from lack of robustness to withstand header errors or losses, because the decompression of the current header can only be done if the immediately preceding header was also received without error and decompressed. The header compression defined in RFC 2508 is not well suited for cellular environments, where bandwidth is at a premium and long error bursts are not uncommon. In RFC 2508, when a packet loss is detected, subsequent packets with compressed headers are invalidated, with a further requirement that it is necessary to send a large size header to recover from the error. Large size headers consume bandwidth and create peaks in the bandwidth demand which are more difficult to manage.

Just using a short sequence number (one with a limited number of bits) to detect packet loss is not robust to an error-prone network, such as in a wireless network where long loss may happen at any time. In this case, long loss is defined as loss of sequence cycle or packets in a row. Under the situation of a long loss, a series of packets within the number of packets of the sequence cycle having a packet identification defined by a limited number of bits may get lost and, as a result, the sequence number in the packet received by the decompressor (receiving device in uplink or downlink) of the receiver wraps around (repeats). For example, assuming the sequence number consists of k bits, the sequence cycle equals to $2^k$.

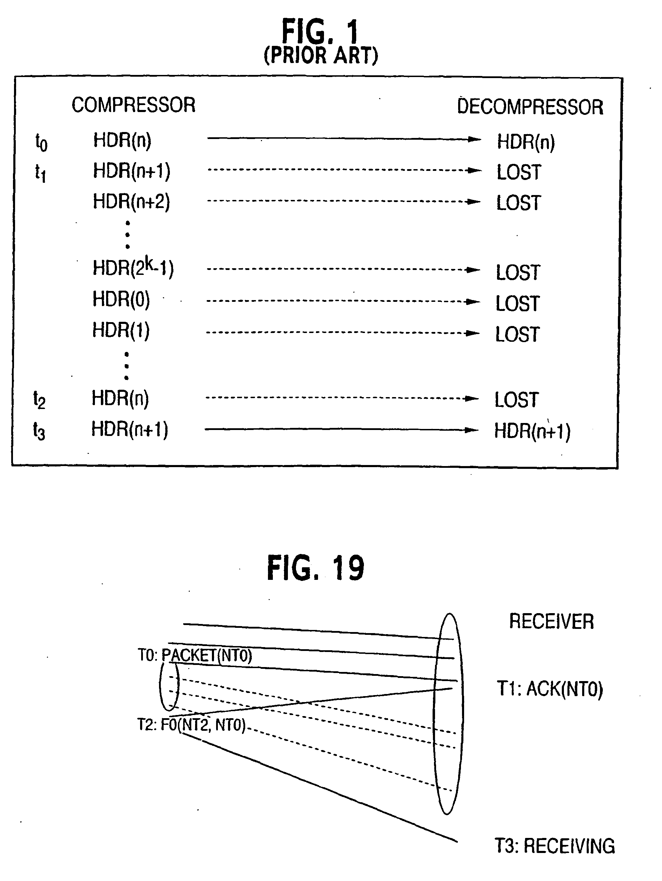

As shown in Fig. 1, the compressor (transmitting device in uplink or downlink) sent packet with seq=n at time $t_0$, and the following $2^k$ packets, beginning from packet with seq=n+1 at time t1 and ending at packet with seq=n at time $t_2$. At time $t_3$, the compressor sends a packet with sequence number equal to n+1 again. Assume a packet with a sequence number equal to n+1 sent at time $t_1$ until the packet with the sequence number equal to n is sent at time $t_2$, which are all lost due to long loss, then the decompressor only receives the packet with the sequence number equal to n sent at time $t_0$ and the packet with the sequence number equal to n+1 sent at time $t_3$. Based on the current packet loss detection scheme defined in RFC 2508, the decompressor concludes that there is no packet loss and decompresses the packet in a wrong way. This not only affects the correctness of decompression of packet with a sequence number equal to n+1, but the subsequent packets as well.

The present invention can provide improved transmission and reception of packets in environments, such as wireless communications, which are prone to periodic interruption of packet reception such as that caused by fading, etc. The invention can provide improved performance of packet transmission and reception in comparison to RFC 2508 including elimination of the wrap around problem of the prior art discussed above in Fig. 1. Proper decoding of a compressed header in a current packet in accordance with the invention is not dependent on correct decompression of an immediately preceding packet as with RFC 2508.

This invention provides a mechanism which detects long loss at the header compression level, as well as a corresponding recovery scheme after detection of long loss. The invention is generally applicable to communication protocols where sequence synchronization must be maintained between the transmitter and the receiver, in the presence of long error bursts.

Adaptive header compression is a general framework for robust header compression, that can be parameterized to account for the existence/non-existence and performance characteristics of a reverse channel. The framework includes three basic modes of operation:

- Bidirectional Deterministic Mode: This mode is used in the case where there is a 'well-defined' reverse channel, which can be used to carry various types of feedback information from the decompressor to the compressor. One example of such feedback from the decompressor is an acknowledgment, used, e.g., to advance from a lower compression state to a higher compressor state.
- Bidirectional Opportunistic Mode: This mode of operation is used in the case where a reverse channel exists, but is 'loosely' defined, i.e., the channel may not always be available, or may be slow/unreliable.
- Unidirectional Mode (Pessimistic or Optimistic): This mode of operation is used when there is no reverse channel of any kind.

The invention is defined by the claims.

Fig. 1 illustrates the deficiency of packet loss WITH RFC 2508.
Fig. 2 illustrates an example of a system architecture which may be used to practice the present invention.
Fig. 3 conceptually illustrates compression context information.
Fig. 4 conceptually illustrates decompression context information.
Fig. 6 illustrates the transition of a compressor from transmitting headers having a higher number of bits to headers having a lower number of bits using acknowledgments.
Fig. 7 illustrates the transition of a compressor from transmitting headers with a first order of compression to headers with a second order of compression.
Fig. 8 illustrates the detection and recovery of packets when a wraparound having a number of packets greater than $2^k$ occurs where k bits are used to encode sequence numbers n defined by the k bits.
Fig. 9 illustrates the operation of a compressor and decompressor using acknowledgments to control the transition between sequence numbers having k bits and $\ell$ extended bits and back to k bits.
Fig. 10 illustrates bandwidth reduction achieved by transmitting a sequence of FH and FO packets before an acknowledgment is generated by the decompressor signifying reception of a FH packet.
Figs. 14A-F illustrate formats of packets which are transmitted by the present invention.
Fig. 15 illustrates the switching of a state of compression of a compressor to a higher state of compression only after an acknowledgment is received from a decompressor.
Fig. 16 illustrates the switching of a state of compression of a compressor to a higher state of compression before a present number of packets arrives at a decompression when an acknowledgment is received.
Fig. 17 illustrates the switching of a state of compression of a compressor to a higher state of compression after a preset number of packets arrives at a decompressor before an acknowledgment arrives.
Fig. 18 illustrates the switching of a state of compression of a compressor to a higher state of compression only after a present number of packets arrives at a decompression.
Fig. 19 graphically illustrates a comparison of the invention with RFC 2508.
Fig. 20 illustrates a graphical analysis of the performance of the present invention.

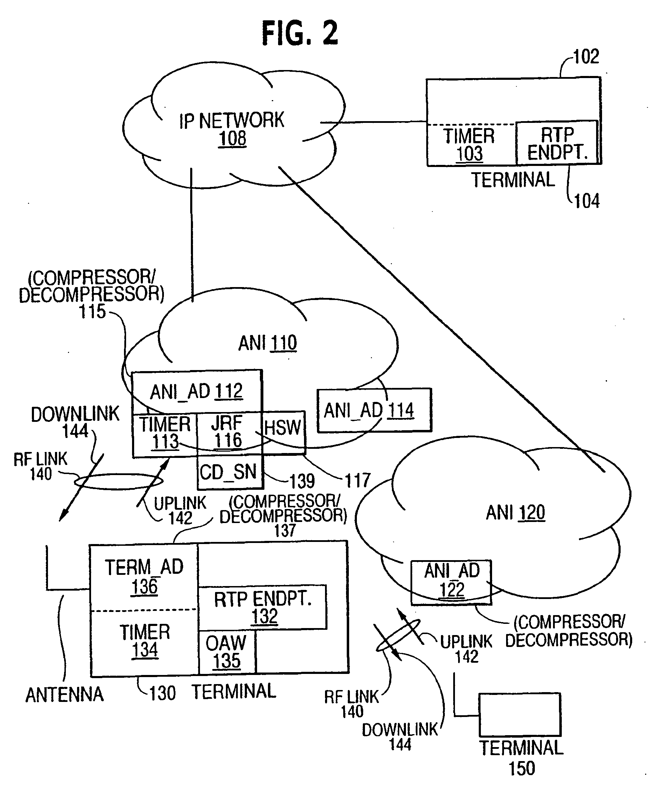

Fig. 2 illustrates an exemplary system in which the present invention may be practiced. However, it should be understood that the present invention is not limited thereto with other system architectures being equally applicable to the practice of the invention. A terminal 102 is connected to a IP network 108. Terminal 102 may be, without limitation, a personal computer or the like running RTP/UDP/IP, and providing packetized voice samples in RTP packets for transmission over IP network 108. Terminal 102 includes a RTP endpoint 104 which identifies this terminal (e.g., including IP address, port number, etc.) as either a source and/or destination for RTP packets. While IP network 108 is provided as an example of a packet network, however, other types of packet switched networks or the like can be used in place thereof. Terminal 102 also includes a local timer 103 for generating a time stamp.

Access network infrastructures (ANI) 110 and 120, which may be resident in a base station subsystem (BSS), are connected to IP network 108. The ANI's are network entities and network nodes. A plurality of wireless mobile terminals which are network entities and network nodes and function as mobile compressors and mobile decompressors (two wireless terminals 130 and 150 are illustrated) are coupled via radio frequency (RF) links 140 to ANIs 110 and 120. When one of the mobile terminals 130 and/or 150 move, it is necessary for the terminal(s) from time to time, as a consequence of movement beyond radio connection with one ANI, to be handed off to another ANI. This process also requires, when header compression and decompression is used and located in the ANI, the transfer of compression and decompression context information from one ANI (old) to another ANI (new) to achieve seamlessness, e.g. if mobile terminals 130 and/or 150 move and are handed off from ANI 110 to ANI 120. The transfer, as discussed below, can happen at various times but to minimize disruption, it should be completed by the time the new ANI takes over the header compression/decompression role from the old ANI. The relocation of compression/decompression functions occur when the new network entity takes over at a point in time. On the other hand, the transfer of context information may be spread over a time material and precedes relocation. RF link 140 includes, as illustrated, an uplink traffic 142 (from mobile terminals 130 and 150 to ANI 110) and downlink traffic 144 (from ANI 110 to mobile terminals 130 and 150). The mobile terminals 130 and/or 150 are handed off from one ANI, such as ANI 110 when one or more of the mobile terminals move to another ANI, e.g. ANI 120. Each ANI interfaces with one or more of the wireless (or radio frequency) terminals (including terminal 130) in a region to IP network 108, including converting between wireline signals (provided from IP network 108) and wireless or RF signals (provided to or from terminals 130 and 150). Thus, each ANI allows packets, such as, but not limited to, RTP packets transmitted and received from IP network 108 to be sent over RF link 140 to at least one of wireless terminals 130 and 150, and allows transmission of packets, such as RTP packets but not limited to RTP packets, to be transmitted from terminals 130 and 150 to be transmitted by IP network 108 to another terminal, such as terminal 102.

Each ANI includes a plurality of entities. The more detailed depiction and explanation of ANI 110 is given to facilitate understanding of the architecture and operation of all of the ANI's in the network. All ANI's may be of the same architecture as ANI 110 but are not illustrated in the same degree of detail. ANI 110 includes one or more ANI adapters (ANI_AD), such as ANI_AD 112 (illustrated in detail) and ANI_AD 114, each of which preferably includes a timer 113 to provide a time stamp. Each ANI_AD performs header compression (prior to downlink traffic) and decompression (after uplink traffic). Headers (one or more header fields, such as a time stamp and sequence number) for RTP packets received from IP network 108 are compressed by ANI_AD 112 prior to transmission to terminals 130 and 150 over downlink traffic 142, and packet headers received from mobile terminals 130 and 150 are decompressed by ANI_AD 112 before transmission to IP network 108. ANI_AD 110 functions as a transmitter/receiver (transceiver) and specifically as a compressor/decompressor 115 with the compressor compressing data packets prior to transmission and the de-compressor decompressing data packets after reception. ANI_AD 110 interfaces with terminals located in a specific or different area within the region to IP network 108. ANI_AD 112 includes a timer 113 for implementing a timer-based decompression technique. ANI_AD 112 also includes a jitter reduction function (JRF) 116 which operates to measure the jitter on packets (or headers) received over the network 108 and discard any packets/headers which have excessive jitter.

Each terminal includes a plurality of entities. The more detailed explanation of the mobile terminal 130 is given to facilitate understanding of the design and operation of all mobile terminals 130 and 150 in the network which are of a similar design and operation. Each of the mobile terminals may also function as a compressor/decompressor in communications beyond ANI's 110 and 120 and specifically, with other networks. Mobile Terminal 130 includes an RTP endpoint 132 which is a source (transmitter) and/or destination (receiver) for RTP packets and identifies the terminal's IP address, port number, etc. Mobile terminal 130 includes a terminal adapter (MS_AD) 136 which performs header compression (packets to be transmitted over uplink traffic 142) and decompression (packets received over downlink traffic 144). Thus, terminal adapter (MS_AD) 136 may be considered to be a header compressor/decompressor (transceiver) 137, similar to the ANI_AD compressor/decompressor. The terminology MS_AD has the same meaning as AD. The MS_AD 136 also includes a timer 134 (a receiver timer) for calculating an approximation (or estimate) of a RTP time stamp of a current header and to measure elapsed time between successively received packets to locate loss of packets during transmission to the terminal by wireless degradation such as fading. The MS_AD 136 may use additional information in the RTP header to refine or correct the time stamp approximation as described in copending Patent Application Serial No. 091377,913. The time stamp approximation may be corrected or adjusted based upon a compressed time stamp provided in the RTP header. In this manner, a local timer and a compressed time stamp may be used to regenerate the correct time stamp for each RTP header.

RTP packets, including packets with compressed and uncompressed headers, are transmitted in the network such as, but not limited to, the exemplary network of Fig. 2 over a data link (such as wireless link 140) where bandwidth is at a premium and errors are not uncommon. The present invention is not limited to a wireless link, but is applicable to a wide variety of links (including wireline links, etc.).

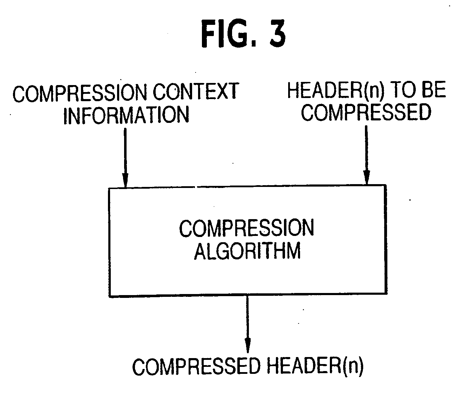

Fig. 3 illustrates conceptually compression context information and examples. Compression context information is a set, subset or representation of a subset of information which may be of any type in a header used by the compressor as an input to the compression algorithm to produce a compressed header and may be transmitted from one entity to another entity. The other input is from the header source of the headers to be compressed.

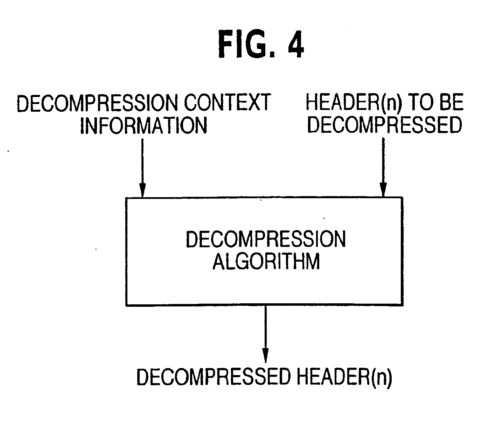

Fig. 4 illustrates conceptually decompression context information and examples. Decompression context information is a set, subset or representation of a subset of information which may be of any type in a header used by the decompression as an input to the decompression algorithm to produce a decompressed header and may be transmitted from one entity to another entity. The other input is from the header source of the headers to be decompressed.

Both the compression and decompression context informations are dynamic, that is, they may be updated by the compressor and decompressor respectively. The frequency of updates depends on the header compression scheme. Events that may result in an update of the compression context information at the compressor include the compression of an incoming header, or the receipt of feedback from the decompressor. Events that may result in an update of the decompression context information at the decompressor include the decompression of an incoming header.

Adaptive Header Compression (ACE) is a general framework for robust header compression that can be parameterized to account for the existence/non-existence and performance characteristics of a feedback channel. The framework includes three basic modes of operation:

- Bi-directional Deterministic Mode: This mode is used in the case where there is a 'well-defined' reverse channel, which can be used to carry various types of feedback information from the decompressor to the compressor. One example of such feedback from the decompressor is the ACKnowledgement, used, e.g., to advance from a lower compression state to a higher compressor state. By reception of ACKs via a well-defined channel, the compressor obtains the knowledge that some specific header has been received. The compressor takes advantage of that knowledge to compress more reliably and more efficiently.

- Bi-directional Opportunistic Mode: This mode of operation is used in the case where a reverse channel exists, but is 'loosely' defined, i.e., the channel may not always be available, or may be slow/unreliable. There are many important applications that are 2-way bi-directional. A primary example is conversational voice or video. In such cases, there is inherently a reverse channel, which can carry the feedback.

- Unidirectional Mode (Pessimistic or Optimistic): This mode of operation is used when there is no reverse channel of any kind. Because there is no feedback at all from the decompressor regarding its current state, the compressor must occasionally send some refreshment information to the decompressor, which can be used to re-establish synchronism in the event that something has gone wrong. Depending on various factors (e.g., channel conditions), that may be known to the compressor, the approach in this mode could be either pessimistic (more frequent refreshes) or optimistic (less frequent refreshes). In addition, there are events that can trigger the compressor to send FH information, to refresh the decompressor and reduce the chance of incorrect decompression.

The ACE compressor can be characterized as progressing through a series of states. The compressor leaves a lower compression state and enters a higher compression state when it has sufficient confidence that the decompressor has received some information.

In the case of RTP header compression, the states are Full Header, First Order, and Second Order states.

- Full Header (FH) State: The compressor enters this state when at initialization time or when some exceptional event (CPU crash or memory loss) occurs. In this state, the compressor essentially transmits FH header information to the decompressor. An FH header contains the complete set of all header fields, plus some additional information. This information can include compressor/decompressor specific data, such as the CID (Context Identifier, used to discriminate multiple flows). The compressor stays in this state until it has acquired sufficient confidence that the decompressor has received the FH header information. FH packets are the least optimal to transmit due to their large size (e.g., at least 40 bytes for IPv4, 60 bytes for IPv6). The compressor leaves this state and enters the FO state when it has suffcient confidence that the decompressor has correctly received an FH header. That confidence could come, e.g., from receipt of an ACK from the decompressor or sending a predefined number of FHs.

- First Order (FO) State: The compressor enters this state when a new string starts, after it has left the FH state. In this state, the compressor essentially transmits FO header information. An FO header contains compressor/decompressor specific fields, and some information that describes irregular changes that have occurred in the essential changing fields. The compressor stays in this state until it has acquired sufficient confidence that the FO header information has been received by the decompressor. That confidence could come, e.g., from receipt of Acknowledgments from the decompressor or sending a predefined number of FOs.

- Second Order (SO) State: The compressor is in this state when the header to be compressed conforms to the pattern of a string, and the compressor is sufficiently confident that the decompressor has acquired the string pattern. In this state, the compressor transmits SO headers. An SO header contains essentially just a sequence number. The preferred mode of operation for the compressor/decompressor is transmission/reception of SO packets, due to their minimal size (on the order of just a few bits).

   In summary, a session starts with the compressor in the FH state. In that phase, the compressor sends a full header to the decompressor to establish a context in the decompressor. This initiates a string. The compressor then enters the FO, or SO states. In the FO state, it sends the necessary essential changing field update information to the decompressor. In the SO state, it sends minimal information to the decompressor. The decompressor does a simple extrapolation based on information exchanged in the previous FH and FO packets until the string ends. When another string starts, the compressor enters the FO state again, and the process repeats.

Bi-directional transmission modes utilize acknowledgments for various functions:

- to inform the compressor that FH information has been received; in that case, the compressor knows that the decompressor has acquired the information necessary to decompress FO headers and therefore the compressor can reliably transition to the higher compression state, FO; this kind of ACK is referred to as FH-ACK

- to inform the compressor that FO information has been received; in that case, the compressor knows that the decompressor has acquired the information necessary to decompress SO headers and therefore the compressor can reliably transition to the higher compression state, SO; this kind of ACK is referred to as FO-ACK
- to inform the compressor that a header with a specific number n has been received; in that case, the compressor knows that the decompressor can determine the sequence number without any ambiguity caused by counter wrap around up to header number n + seq_cycle, where seq_cycle is the counter cycle; the compressor can reliably use k bits for the header sequence number, without concerns of ambiguous or incorrect sequence number decoding at the decompressor, this kind of ACK is referred to as SO-ACK

The control of transition from FH to FO to SO states by Acknowledgments ensure that there is no error propagation. That is, a compressed header that is not received in error can always be correctly decompressed, because synchronization is never lost.

There is a lot of flexibility with respect to when and how often the decompressor sends the acknowledgments. ACE is also extremely resilient to ACKs being lost or delayed. The compressor constantly adapts its compression strategy based on the current information to be compressed and the ACKs received. For example, loss or delay of an FO-ACK may result in the compressor staying longer in the FO state. Loss or delay of an SO-ACK may result in the compressor sending more bits for the sequence number, to prevent any incorrect decompression at the decompressor caused by counter wrap around.

ACKs can be transmitted periodically or non-periodically. The frequency of non-periodic acknowledgments may be decreased or increased from a periodic rate. An ACK can be sent less frequently because ACKs are lost due to errors or network congestion, or ACKs cannot be transmitted due to the intermittent available of the reverse channel or some decompressor conditions. An ACK can also be transmitted more closely spaced than traditional periodic ACK. For example, when the reverse channel is very lightly loaded and available, the decompressor can transmit ACKs more often and as a result the compressor can operate more efficiently and reliably.

Consequently, the feedback channel utilized to transmit the ACKs can have very loose requirements. This is because ACKs only have an effect on the compression efficiency, not the correctness. Delay or loss of ACKs may cause the size of compressed headers to increase, but even in such cases the increase is logarithmic.

In the bi-directional deterministic mode, the transition from FH/FO to FO/SO is acknowledgment based. In the unidirectional mode, an ACK is never sent, so the number of FH/FO packets which are sent before transition to FO/SO state depends on a predefined or a dynamically/adaptively selected value. In the bi-directional opportunistic mode, the ACK may be late, so the transition from FH/FO to FO/SO is not strictly ACK-based, but depends on whichever comes first of 1) transmission of a predefined or dynamically/adaptively selected number of FH/FO, or 2) reception of at least one ACK.

In summary, the number of FO/FH packets to sent before switching to FO/SO state depends on whether an ACK is required before switching and/or a tunable parameter $m$ that may be predefined or dyamically/adaptively selected. Four cases are discussed below.

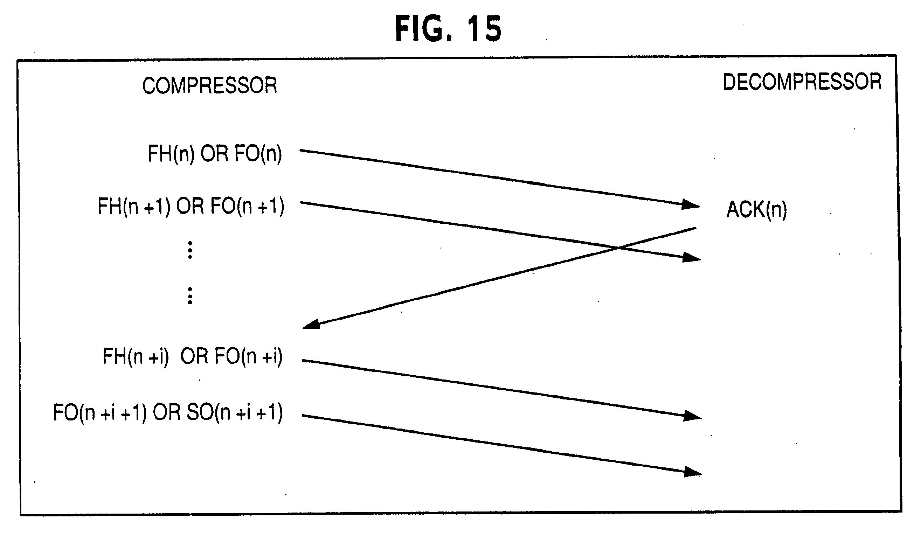

Fig. 15 illustrates switching of the state of compression of the compressor based only on arrival of an appropriate ACK. A sequence of at least one header of a particular state which, as illustrated without limitation are FH or FO headers, is transmitted to the decompressor. The decompressor, upon receiving the first header FH(n) or FO(n) (it could be a header other than the first header) transmits back an Ack(n) which, upon receipt, causes the compressor to transition into a higher compression state which, as illustrated, is FO(N+i+1) or SO(n+i+1) which is the packet transmitted immediately after the reception of ACK(n).

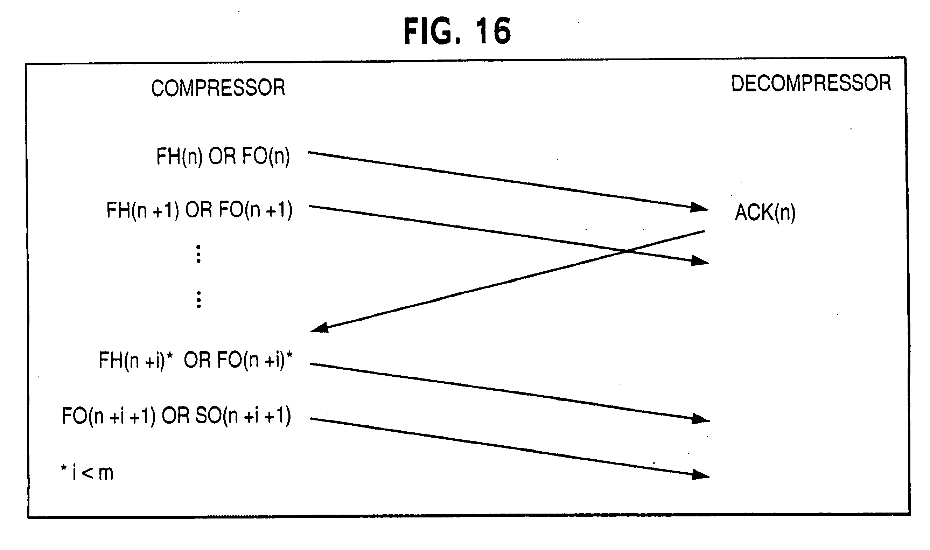

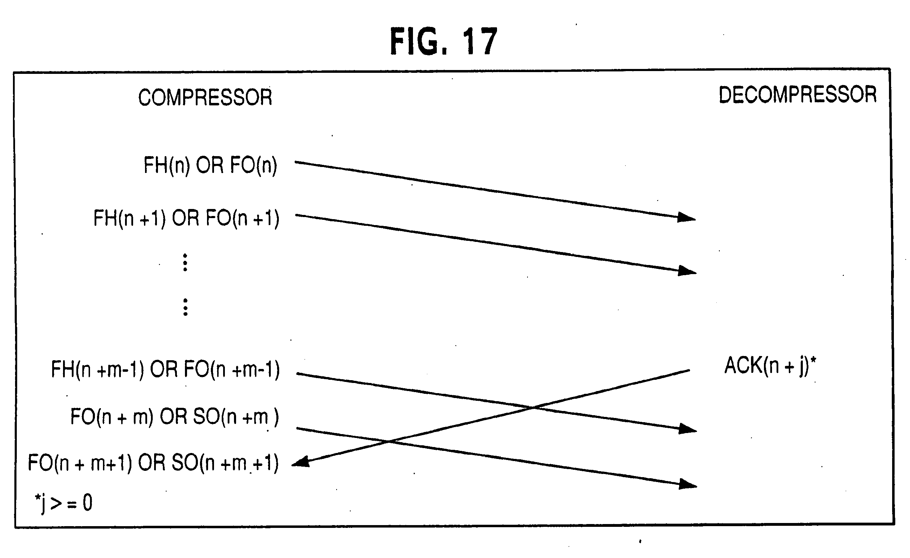

Figs. 16 and 17 illustrate switching of the state of compression of the compressor based on a parameter $m$ which is a number of transmitted headers or ACK (switching access whenever $m$ FO/FH headers are transmitted or ACK is received). The embodiment of Fig. 16 is not limited to FH/FO/SO header transmission by the compressor. In Fig. 16, an ACK(n) arrives before the number of FO/FH headers transmitted reaches $m$, which as the result of the preset number of headers FH/FO being transmitted, causes the compressor to switch to a higher state of compression and transmit packet FO(n+i) or SO(n+i). The embodiment of Fig. 17 is not limited to FH/FO/SO header transmission by the compressor. In Fig. 17, an ACK arrives after $m$ headers are transmitted.

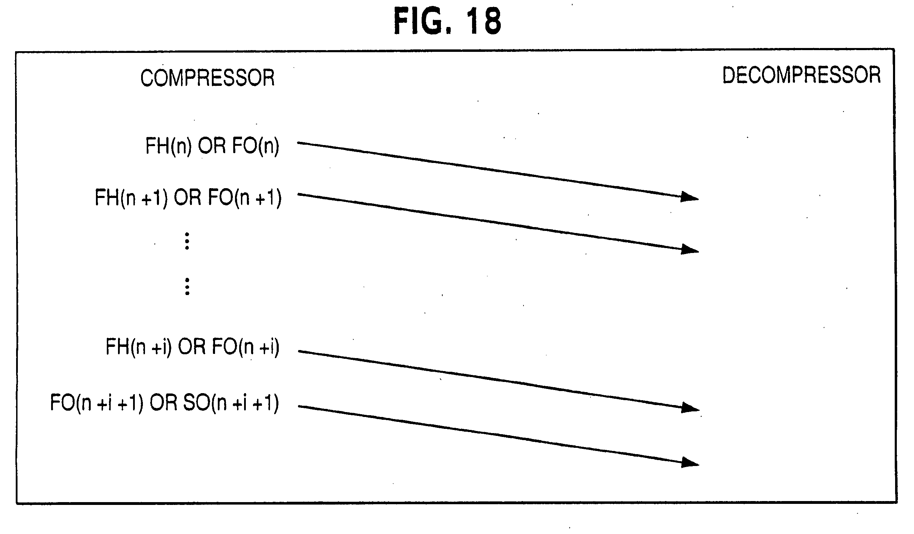

Fig. 18 illustrates switching of the state of compression of the compressor occurs after a set number of headers are sent without any acknowledgments.

Under different modes, the operation strategy of the compressor and decompressor are different.

Operation Modes of the Compressor

- Strictly based on ACK: In this mode, the compressor strictly depends on the reception of the ACKs. If an ACK has not arrived on time due to loss, channel availability, decompressor conditions, etc., the compressor switches to a less compressed mode by for example increasing the length of the coding fields, and it only can switch back to a further compressed mode after it receives appropriate ACKs.

- Loosely based on ACK: In this mode, ACK helps to improve the efficiency and reliability when received, but the compressor doesn't strictly depend on the reception of the ACK. If the compressor receives an appropriate ACK, it switches from a less compressed state to a further compressed state or stays in the current state if it is already in the further compressed state. If it hasn't received an appropriate ACK, it switches from a less compressed state to a further compressed state based on other criterions, e.g., sending a certain number of less compressed headers, instead of the reception of ACK.

- Not based on ACK: The compressor normally operates in this mode when no reverse channel is available. In this mode, the criterion to transition from a less compressed state to a more compressed state is not ACK-based. Rather, the compressor may switch from a less compressed state to a more compressed state after a certain number of less compressed headers have been transmitted. Such number can be a tunable parameter. In addition, there are events that can trigger the compressor to send less compressed information in order to refresh the decompressor and reduce the chance of incorrect decompression.

Operation Modes of Decompressor

- Sending deterministic ACK: In this mode, the decompressor sends ACKS periodically and when it receives FH/FO packets. In addition, the decompressor can send ACKs back to compressor more frequently than periodically when the reverse channel is light-loaded and available.
- Sending opportunistic ACK: In this mode, the decompressor doesn't strictly send ACKs periodically. It sends ACK only when it has an opportunity to send an ACK, e.g., when the reverse channel is available to carry the ACK.
- No ACK: In this mode, the compressor doesn't send ACKS at all.

One example application where the header compression and decompression scheme is useful is where Voice over IP (VoIP) (or IP-telephony) packets are transmitted over cellular systems. When VoIP is applied to cellular systems, it is important to minimize the overhead of the IP/LUDP/RTP header due to the limited bandwidth of the wireless or air (RF) interface. In such a system for example, the ANI_AD interfaces the IP network to a computer terminal running RTP/UDP/IP (e.g., terminal 130) having a cellular or RF interface for receiving RTP packets over the wireless or RF link. This is merely one example application of the compression/decompression technique of the present invention.

Definitions

n: Sequence number assigned by the compressor and carried in headers. The number n always increments by 1 for each new packet and independent of the RTP sequence number. Note that n may be coded in either k-bits ( = (CD_SN)k ), or $\ell$_extended bits ( = (CD_SN)$\ell$_extended ).

CD_SN 139: Internal counter corresponding to n. The compressor and decompressor maintain their counters. The size of the internal counters can be chosen large enough to avoid any ambiguity for the duration of the session, e.g., 32 bits.

(CD_SN)k: k least significant bits of CD_SN. (CD_SN)k is normally sent in the compressed header.

(CD_SN)$\ell$_extended: $\ell$_extended least significant bits of CD_SN. (CD_SN)$\ell$_extended is sent in the compressed header in the extended mode.

S_RFH: CD_SN of packet whose header is known to be correctly reconstructed by the decompressor; S_RFH is continuously updated by the compressor based on feedback from the decompressor. S_RFH is sent in the form of k or $\ell$_extended least significant bits.

N_elapsed: a counter maintained by the compressor to keep track the number of packets have been sent since the last ACKed packet. N_elapsed = current CD_SN - S_RFH, if S_RFH is always set equal to the last ACKed packet by the compressor when it receives an ACK. R_RFH: CD_SN of reference packet at the decompressor, which is set equal to S_RFH when an FO(n, S_RFH) packet is received.

SN(n): The RTP sequence number of nth packet sent by compressor. If the compressor does not do reordering, SN(n) is not necessarily a monotonically increasing sequence wherein n is defined by bit values of the k or $\ell$ extended bits.

TS(n): The RTP time stamp of nth packet sent by compressing.

CFO(n): Current first order difference at packet n. Note that it is a vector, with each of its individual component equal to the difference between the corresponding field in packet n and in packet (n-1); for example, the time stamp component of CFO(n) is calculated as TS(n) - TS(n-1).

FO_DIFF($n_2$, $n_1$): First order difference at packet $n_2$, with respect to packet $n_1$. Each of its individual field is equal to the difference between the corresponding field in packet $n_2$ and in packet $n_1$; for example, the time stamp field of FO_DIFF($n_2$, $n_1$) is calculated as TS($n_2$) - TS($n_1$).

N_Last_Interr: The CD_SN corresponding to the most recent interruption (i.e. nonlinear change). It is updated (by the compressor) to n whenever CFO(n) != CFO(n-1). S_DFOD: Default first order difference at the sender. S_DFOD is a vector that specifies the current pattern. S_DOD is used by the compressor to determine if the current header conforms to the pattern. The current header n conforms to the pattern if header(n) = header(n-1) + S_DFOD. When the pattern does not change from one string to the next, S_DFOD is static. Otherwise, the compressor has to determine S_DFOD on a dynamic basis .

TS_DFOD and SN_DFOD: the components in S_DFOD corresponding to RTP time stamp and sequence number, respectively.

R_DFOD: Default first order difference at the compressor. R_DFOD is a vector that specifies the current pattern. R_DOD is used by the decompressor to decompress SO headers. When the pattern does not change from one string to the next, R_DFOD is static. Otherwise, the decompressor has to determine R_DFOD on a dynamic basis. By design, S_DFOD and R_DFOD are *always* equal during SO state.

Extended_flag: A flag maintained by the compressor. If it is TRUE, then $\ell$_extended bits are used for the CD_SN and other sequence parameters will be sent in the headers. Otherwise, (CD_SN)k will be sent. Note that this flag itself is also carried in the headers so that the decompressor knows which coding of CD_SN is used.

Header(n): A term used generically to mean the header information sent by the compressor. Header(n) can be sent in various forms, FH(n), FO(n, S_RFH), SO(n), depending on the state of the compressor. Note that in the header, n is actually coded as (CD_SN)k or (CD_SN)$\ell$_extended, depending the extended flag.

Diff($n_2$, $n_1$): The *true* distance between $n_2$ and $n_1$, which are coded as (CD_SN)k or (CD_SN)$\ell$_extended. Difl($n_2$, $n_1$) = CD_SN($n_2$) - CD_SN($n_i$), where CD_SN($n_2$) and CD_SN(n1) are the CD_SN corresponding to $n_2$ and n, respectively. For example, if the first packet carries (CD_SN)k = 14 and the second one carries (CD_SN)k = 1, then the true distance is (16 + 1 - 14) = 3, not (1 -14) = -13.

FH_Req: Sent by the decompressor to request the compressor to operate in the FH state. This is used for example when the decompressor just recovered from a crash and no longer has reliable state information.

ACK(n): Sent in response to header(n). An ACK means that packet(n) is correctly received. Seq_cycle: Seq_cycle -1 is the maximum number reached by the sequence number before wrapping around and going back to 0. Seq_cycle = $2^k$.

SEQ Ext_cycle: = $2^{\ell\text{\_extended}}$.

HSW 117: The compressor maintains a sliding window of headers sent to the decompressor (HSW): header (n), header (n+1), header (n+2), etc. The headers could have been sent in the form of FH, FO or SO. When the compressor receives an ACK(n), it will delete any Header(p) where p <$n_2$-$n_1$ and also move Header(p=n) to Header(S_RFH). Static fields do not need to be stored as multiple entries in HSW. Only a single copy of the static fields is needed. Note that in HSW, each header is marked with a color, either green or red.

Color of a header (packet): It is green if the CD_SN carried in the header (packet) is coded in k bits. Otherwise, it is red, e.g. $\ell$ extended bits. In implementation, a 1-bit flag can be used to store the color. The color is used to assist the compressor to uniquely identify a header when receiving an ACK.

OAW 135: The decompressor maintains a sliding window of headers it has successfully decompressed and ACKed: header (n1), header (n2), header (n3). Note that the ACKs are not known for sure to be received by the compressor. The window will be referred to as the outstanding Ack window (OAW). Static fields do not need to be stored as multiple entries in OAW. Only a single copy of the static fields is needed.

R_Last_Decomp: The CD_SN of the last reconstructed packet by the decompressor. The decompressor maintains the corresponding full header which is referred as FH(Last_Decomp). Note:

The original IP, UDP and RTP headers are transferred, except for changes described below.

- The Total Length field of IP header (2 bytes) is replaced with extended_flag (1 bit), seq_num (4 or 8 bits), and other optional information. If extended flag is equal to 1, seq_num is 8-bit long, i.e. the packet is sent in extended mode.
- The Length field in the UDP header (2 bytes) is also replaced with the context ID for header compression, referred as CID. The compressor can simultaneously compress multiple RTP flows independent of each other. Each flow is assigned a unique CID. In implementation, CID could be either 1-byte or 2-byte long, depending on the maximum number of RTP flows at any given time.

A first embodiment of the invention, which may be practiced with the system of Fig. 2, is based upon IP/UDP/RTP fields most of the time being either constant or can be extrapolated in a linear fashion. In those instances, the compressed header just carries a multiple non extended sequence number having k bits that provides sufficient information for linear extrapolation. Like RFC 2508, with the invention when linear extrapolation results in incorrect header reconstruction, the transmitter sends FO difference information. Unlike RFC 2508, the difference information is calculated with respect to a reference packet known to be correctly received, rather than the one immediately preceding the current packet This feature ensures that the current header can be reliably reconstructed even if one or more past packets were lost. Since the header can be reliably reconstructed in that manner, there is no need to send a full header. The reference is determined and updated by the compressor of the receiver according to acknowledgments received from the decompressor.

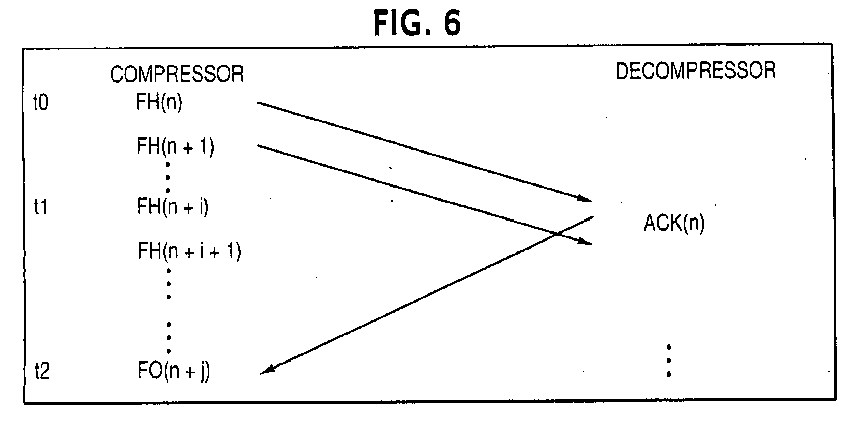

The compressor uses as a reference header a header which is known to be correctly decompressed based on received acknowledgments (ACKs) as illustrated generally in Fig. 6. The compressor sends a series of full header packets FH(n)...FH (n+i+1)...which cover a time sequence just prior to $t_2$ at which time the acknowledgment ACK(n) produced by the compressor receiving full header packet FH(n) is received. The transition from FH to FO (FO(n+j) as illustrated) is synchronous. The time sequence to $t_2$ is dependent on the round trip radio transmission time.

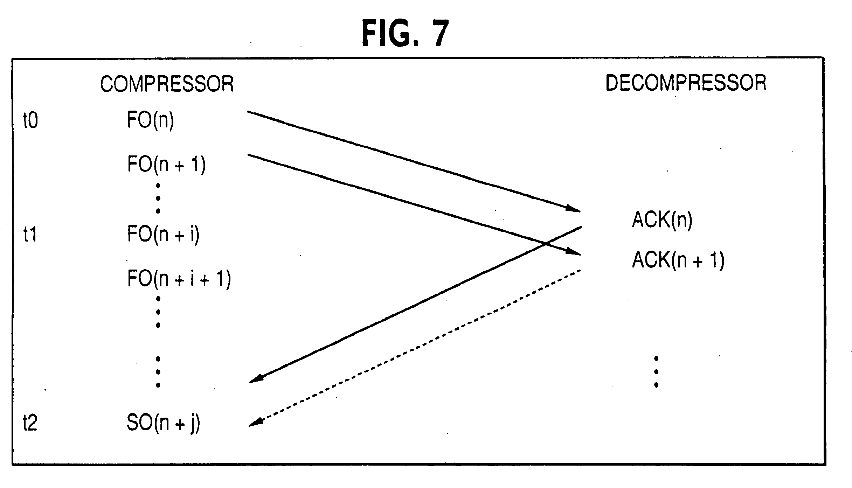

Fig. 7 illustrates the transition of the compressor from transmitting first order packets FO (FO(n), to FO (n+i+1)... with at least one acknowledgment ACK(n) and optionally ACK(n+1) being generated by the decompressor before the compressor synchronously transitions to the second order packets SO (SOn+j) with a round trip radio delay to time $t_2$ required for synchronization. The number of ACKs required by the compressor before transition from the FO state to the SO state is dependent on the variations between packets. For example, if the variation between packets is linear with constant parameters, only one ACK is required to transition from FO state to SO state. To be able to decompress the current header, the decompressor only needs to know the reference header instead of the immediately preceding header as with RFC 2508. In this scheme, the compressor sends full headers (FH type headers) at initialization. It sends first order difference information (FO type headers) when linear extrapolation does not apply. However, the compressor does not transmit SO difference headers until the preceding FH or FO has been acknowledged, and linear extrapolation applies.

At the compressor, the reference packet is defined to be the last one whose ACK has been received. Specifically, when the transmitter receives ACK(n), an acknowledgment for packet n, it will retrieve packet n previously stored in memory and save it as the reference packet (packet n was stored in memory when it was sent). Subsequently, all header compression is done with reference to that packet, until a new ACK is received, at which point the packet that has just been ACKed becomes the new reference packet. The memory in the transmitter where the potential reference packets are stored is referred to as the header sent window (HSW) depicted as entity 117 in Fig. 2. If a FO difference information has to be sent in the compressed header, the compressor will explicitly include the sequence number of the reference packet (reference sequence number).

At the decompressor, when an ACK(n) is sent, header(n) is stored in the outstanding acknowledgment window (OAW) depicted as entity 135 of Fig. 2. Subsequently, when a FO difference header is received, the decompressor will determine the reference packet from the reference sequence number, retrieve the corresponding reference packet from the OAW 135 and use it to reconstruct the full header.

The invention uses the linearity of RTP time stamps generated at the compressor which closely follow a linear pattern as a function of the time of the day clock. Based on the timer 134 maintained at the decompressor of the receiver and using an extended sequence number for FO packets defined by $\ell$ extended bits, all of a long loss within a threshold can be detected and recovered.

With speech being assumed, if the time interval between consecutive speech samples and packets is $t$ msec, then the RTP time stamp of header n (generated at time n* t msec) equals the RTP time stamp of header 0 (generated at time 0) plus TS_stride * n, where TS_stride is a constant dependent on a voice codec of the voice source of the transmitter. Consequently, the RTP time stamp in headers received by the decompressor follows a linear pattern as a function of time, but less closely than the compressor, due to the delay jitter between the compressor and the decompressor. In normal operation (absence of crashes or failures), the delay jitter is bounded, to meet the requirements of conversational real-time traffic.

A string occurs as a sequence of headers that all conform to a particular pattern. Specifically, the RTP sequence number (SN) is incremented by I from one header to the next. The RTP time stamp (TS) is non decreasing, and follows some predictable pattern: If headers $n_1$ and $n_2$ are in the same string, the TS of header $n_2$ can be derived from the TS of header $n_1$ and the pattern function. The other field values, except perhaps for UDP checksum and IP Id, do not change within the string. Thus, once a header, e.g. $n_1$ has been correctly decompressed, the subsequent headers in the same string can be decompressed by extrapolation according to the pattern. Once the compressor determines that a header has been successfully decompressed, and the pattern acquired by the decompressor, it just has to send a k-bit sequence number, denoted (CD_SN)k, as a compressed header for the subsequent packets in the same string. (CD_SN)k are the k least significant bits of a larger (compressor) decompressor sequence number (CD_SN).

In this scheme, the decompressor uses timer 134 or another timer not illustrated in Fig. 2 to obtain the time elapsed between two consecutively received packets. Based on such timing information and the particular compression rule which is used by the compressor along with the sequence number, the decompressor can detect and/or recover from the long loss.

Let

- ·HDR(i) be the header with short sequence number i
- HDR($n_1$) be the last header which has been successfully decompressed
- HDR($n_2$) be the header which has been received right after HDR($n_1$)
- TS_stride be the RTP TS increment every $t$ msec
- SEQ_CYCLE be the cycle of sequence number used in HDR
- DIFF($n_2$, $n_1$) be the difference between packets with sequence number $n_2$ and $n_1$.

It is defined as follows:

- DIFF($n_2$,$n_1$) = $n_1$ when $n_2 > n_1$
- DIFF($n_2$, $n_1$) = $n_2 + 2^k - n_1$ when $n_2 \leq n_i$

Upon receiving HDR($n_2$) right after receiving HDR($n_1$), the decompressor determines whether or not a long loss happened between these two packets, i.e., whether or not there are DIFF($n_2$, $n_1$) packets lost or there are SEQ_CYLE * $p$ + DIFF($n_2$, $n_1$) ($p > 1$) packets lost. The detection scheme also relies on the type of HDR($n_2$). Based on the three header types defined in header compression schemes, 2 cases are listed as follows.

Case 1: HDR($n_1$), SO($n_2$)
Case 2: HDR($n_1$), FO($n_2$)

Long Loss Detection and Recovery for Case 1

To detect whether or not there is long loss in case 1, a timer (e.g. timer 134) is maintained at the compressor, and it is checked and updated whenever a packet is received. Let

- T be the time when HDR($n_1$) is received
- T+$\Delta$T be the time when HDR($n_2$) is received

The compressor sends SO packets only if the one or more preceding FH or FO packets have been acknowledged, and also linear extrapolation applies from the acknowledged header. Therefore, If HDR($n_2$) is SO and no matter what type HDR($n_1$) is, linear extrapolation applies from HDR($n_1$) to HDR($n_2$). This basically means that the RTP time stamp and RTP sequence number for packet $n_1$ through $n_2$ when generated at the compressor, closely follows a linear pattern as a function of the time of day clock. Consequently, the headers coming into the decompressor also follow a linear pattern as a function of time, but with fluctuation due to jitter between transmitter and receiver.
Under the assumption that the upper bound of jitter is always less than (SEQ_CYCLE * t) msec, the following rule to detect long loss applies:

[Rule 1]

- if (DIFF($n_2$,$n_1$) * t msec $\leq \Delta$T < (DIFF($n_2$,$n_1$) + SEQ_CYCLE) * t msec ), only DIFF($n_2$,$n_1$) packets are lost;
- if ((DIFF($n_2$,$n_1$) + SEQ_CYCLE) * t msec $\leq \Delta$T < (DIFF($n_2$,$n_1$) + 2 * SEQ_CYCLE) * t msec ), (SEQ_CYCLE + DIFF($n_2$,$n_1$)) packets are lost;
- In general, if ((DIFF($n_2$,$n_1$) + $i$* SEQ_CYCLE) * $t$ msec $\leq \Delta$T < (DIFF($n_2$,$n_1$) + ($i$ +1) * SEQ_CYCLE) * $t$ msec ), ($i$ *SEQ_CYCLE + DIFF($n_2$,$n_1$)) packets are lost;

To recover RTP time stamp and RTP sequence number from such long loss, only the number of lost packets is needed.

Let

- $N_{loss}$ be the number of packets lost between packet $n_1$ and packet $n_2$ which can be obtained based on rule 1
- TS(i) and SEQ(i) are the RTP time stamp and RTP sequence number of packet i

The RTP time stamp and RTP sequence number can be derived by the RTP time stamp and RTP sequence number of packet $n_1$ as well as $N_{loss}$ which are shown in the following formula.

$$TS(n_2) = TS(n_1) + N_{loss} * TS\_STRIDE$$

$$SEQ(n_2) = SEQ(n_1) + N_{loss}$$

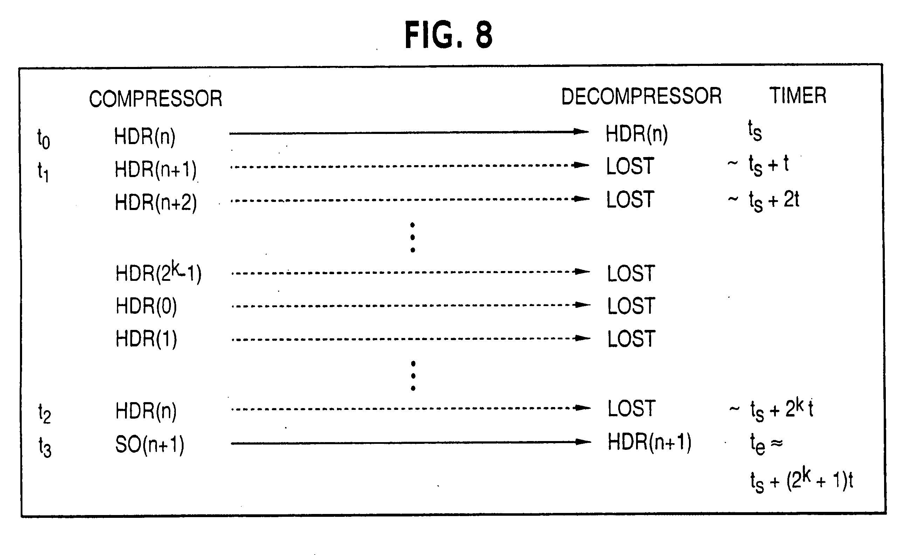

Fig. 8 illustrates an embodiment of the invention which detects and recovers from long loss in case 1 to detect long loss when a wraparound in the loss occurs where more packets are lost than $2^k$ wherein k is the number of bits in the sequence number SN(n) of the packets. Assuming decompressor receives HDR(n) which is sent at time t0, and all the packets sent between t1 to t3 have been lost, and then decompressor receives SO(n+1) which is sent at time t3. Since packet n+1 sent at time t3 is a SO packet which indicates that all the packets sent from t0 to t3 fall into the same string, i.e. the RTP sequence number Sn(n) of these packets follows a linear pattern as a function of time of the day clock, the number of packets lost between t0 and t3 can be detected by the timer 134 maintained in the decompressor. The procedure is as follows:

Assuming the time interval between consecutive speech samples and packets is t msec., the decompressor starts its local timer 134 (with value $t_s$) when it receives HDR(n) sent at time t0, then the timer increases based on the day clock. When SO(n+1) sent at time t3 is received at the decompressor, the timer would reach to which approximately equals $t_s+(2^k+1)t$ due to jitter. Since the time difference between $t_s$ and $t_e$ (around $(2^k+1)t$) is larger than t msec., packet n sent at time t0 and packet n+1 sent at time t3 won't be consecutively sent packets and a long loss happens between these two packets. In addition, since the time difference between $t_s$ and $t_e$ is smaller than $(2^{k+1}+1)t$, there won't be more than one sequence cycle of packet loss. Therefore, the decompressor can conclude that there are $2^k$ packets lost.

Long Loss Detection and Recovery for Case 2

The long loss detection and recovery scheme cannot be applied to case 2 where the FO header is received after a SO, FO or FH header. In this case, even if the time difference $\Delta t$ between packet $n_2$ and $n_1$ is larger than (DIFF $(n_2,n_1)$ + SEQ_CYCLE) * t msec, it doesn't mean that long loss happened because it may be due to silence period from the compressor. In this case, based on the information provided in the FO header, the RTP TS can be successfully regenerated, but not RTP sequence number because long loss or silence can not be distinguished just based on timing. To solve this problem, an extended sequence number is used having $\ell$_extended bits ($\ell$_extended>k non extended bits) for the first FO packets within a FO series where all the packets belong to the same string, until there is ACK for FO sent back from decompressor. This scheme detects and recovers from long loss under the assumption that the upper bound of long loss is less than $2^{\ell\_extended} * t$ msec.

To implement this scheme, an internal counter CD_SN 139 for packets is maintained by the compressor. The CD_SN 139 counts every packet sent out from compressor of the transmitter. The sequence number sent in the modified full header and compressed header is just a snap shot of the non extended k or $\ell$_extended least significant bits of the CD_SN 139. Based on the rule of the header compression/decompression scheme, the decompressor is able to reconstruct the current absolute number of received packets.

Let

CD_SN_LAST be the absolute packet number of last packet received, i.e., packet n,; CD_SN_CURR be the absolute sequence number for the current FO packet, i.e., packet $n_2$; and DIFF(CD_SN_CURR, CD_SN_LAST) be defined as (CD_SN_CURR)-(CD_SN_LAST). Based on the following rule, a long loss within the upper bound of $2^{\ell\_extended} * t$ msec can be detected successfully.

[Rule 2]

if (DIFF(CD_SN_CURR, CD_SN_LAST) > $2^k$,
a long loss is detected.

The number of packets lost $N_{loss}$ can be calculated with the following formula:

$$N_{loss} = DIFF(CD\_SN\_CURR, CD\_SN\_LAST) = (CD\_SN\_)-(CURR-CD\_SN\_LAST).$$

Based on $N_{loss}$, the RTP sequence number can be regenerated by the decompressor under the following formulas and the RTP time stamp can be regenerated based on the reference header and the corresponding delta.

$$SEQ(n_2) = SEQ(n_1) + N_{loss}$$

Since the extended sequence number uses more bandwidth than normal sequence number in view of its larger number of bits, it is not suggested to use it frequently, but just for first FO packets until ACK for this series ofFO comes back to the compressor.

It should be noted that this scheme cannot detect and recover from long loss which is longer than $2^{\ell\_extended}$ * $t$ msec; therefore, $\ell\_extended$ should be selected carefully so that it can detect the long loss which cannot be indicated from the lower layer of the protocol stack. If the long loss is longer than $2^{\ell\_extended}$ * $t$ msec, it is required that a lower layer can provide indication of such extremely long loss, and disconnection at lower layer or other long loss recovery methods, e.g., sending a request to compressor, is applied.

When the compressor needs to send a series of FO type packets where all the packets belong to the same string, it uses sequence number with $\ell\_extended$ bits until at least one ACK for this series of packets comes back from decompressor. But when a SO packet is needed to be sent, the compressor just uses a k-bit sequence number.

At the compressor, timer 134 (or another timer not illustrated in Fig. 2) is started whenever a packet arrives. The timer runs until the next packet arrives. If the incoming packet is of FH type, no timing information is needed and the timer should be reset.

If the incoming packet is of FO type, rule 2 is applied to check whether or not a long loss has happened and corresponding recovery scheme for FO packet transmission should be

A further embodiment of the invention, practiced with the system of Fig. 2, uses the fact that the IP/UDP/RTP fields are either constant or can be extrapolated from a predictable pattern. In those instances, the compressed header just carries a non extended sequence number having k bits that provides sufficient information for extrapolation. When extrapolation would result in incorrect decompression for one or more fields, the compressor sends the required additional information for those fields (update information).

To provide robustness to errors and error bursts, the compressor encodes the update information with respect to a reference header known to be correctly decompressed. The compressor knows a header is correctly decompressed when it receives the corresponding acknowledgment. An ACK mechanism ensures that the current header can be reliably reconstructed even if one or more past headers were lost.

A string is defined as a sequence of headers that all conform to a particular pattern. The RTP sequence number (SN) is incremented by 1 from one header to the next. The RTP time stamp (TS) is non decreasing, and follows some predictable pattern. If headers n, and $n_2$ are in the same string, the TS of header $n_2$ can be derived from the product of sequence number offset p between $n_2$ and $n_1$ and TS and the pattern function. The other field values, except perhaps for a UDP checksum and IP Id, do not change within the string. Thus, once a header, $n_1$, has been correctly decompressed, the subsequent headers in the same string can be decompressed by extrapolation according to the pattern. Once the compressor is informed that a header has been successfully decompressed, and the pattern has been acquired by the decompressor (as evidenced by the ACKs), it just sends a sequence number, as a compressed header for the subsequent packets in the same string.

In the case of voice, the TS has a linearly increasing pattern. Thus the TS of header ($n_2$) can be calculated as: $TS(n_2) = TS(n_1) + TS\_stride * p$, where TS_stride is the time stamp increment between two consecutive headers and p is the sequent number offset between packets $n_2$ and $n_1$. A silent interval breaks the linear relationship and causes a string to terminate. A new string starts with a new talk spurt.

Thus the compressor goes through three different phases: initialization, update and extrapolation. A session starts with an initialization phase. In that phase, the compressor sends full headers to the decompressor until an ACK is received. After the initialization is completed, when a string starts, the compressor of the transmitter enters an update phase, where it sends the necessary update information to the decompressor. Once the compressor receives an ACK or ACKs indicating the decompressor has acquired the information necessary to do the extrapolation, the compressor transitions to the extrapolation phase. In the extrapolation phase, the compressor only sends a sequence number as each compressed header, until the string ends. When another string starts, the compressor of the transmitter enters another update phase, and the whole process is repeated. The headers sent in the initialization, update and extrapolation phases are FH, FO and SO. FH, FO and SO all carry a sequence number incremented by 1 at each header sent by the compressor SO essentially consists only of that sequence number. In the following, the ACKs sent in response to FH and FO are called FH ACK and FO ACK respectively.

Long error burst and loss of synchronization - Periodic ACKs

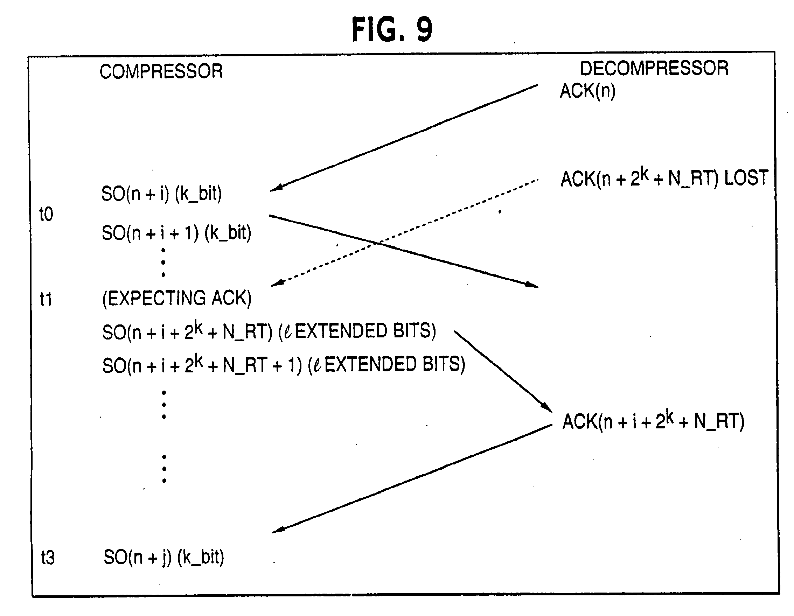

If the above sequence number is coded with k bits, it will wrap around every seq_cycle headers (seq_cycle = $2^k$). Therefore, if an error burst lasts longer than the duration of seq_cycle headers, the decompressor cannot unambiguously determine the number of elapsed headers just from the sequence number, and consequently cannot perform proper decompression. To address this wrap-around and long burst problem, periodic acknowledgments (ACKs) are used. Fig. 9 illustrates the operation of the invention using the k bit sequence numbers and $\ell$ bit extended bit numbers in association with periodic acknowledgments (ACKs) which are synchronously generated by the decompressor on every detected $2^k$ received packets. Assuming the compressor receives the ACK(n) for packet n before it sends SO packet n+i with a k bit sequence number, the compressor is expecting another ACK for packet (n+$2^k$+N_RT) from the decompressor before it sends packet (n+i+$2^k$+N_RT). Assuming ACK(n+$2^k$+N_RT) is lost during the transmission, the compressor transfers to the extended state using $\ell$ bits and sends packet (n+i+$2^k$+N_RT) with an $\ell$ extended bit sequence number. When the decompressor receives the packet (n+i+$2^k$+N_RT) with an $\ell$ extended sequence number, it sends an ACK (n+i+$2^k$+N_RT) back to compressor. When the compressor receives the ACK(N+1+$2^k$+N_RT), it transfers back to non-extended state, and sends packet SO(n+j) with just a k-bit sequence number. The decompressor is expected to send an ACK at regular intervals, spaced closely enough so that normally the compressor receives an ACK at least once every $2^k$ seq_cycle headers. The compressor maintains a counter, N_elapsed, to keep track of the number of packets elapsed since the last ACK it received. If N_elapsed >$2^k$ seq_cycle headers, the compressor operates in extended mode, where $\ell$_extended bits, rather than a smaller number of non extended k bits are used for the sequence number, with the number of $\ell$_extended bits > the number of k non extended bits. The $\ell$_extended-bit sequence number and the reduced number of k bits in the non extended sequence number can be seen as the least significant bits of the non extended sequence number and $\ell$_extended bits being the least significant bits of the count CD_SN 139 of the transmitter. They are denoted (CD_SN) k and (CD_SN) $\ell$_extended respectively. N_elapsed will increment by 1 for each packet sent by the compressor. The sequence number SN only decreases when the compressor receives an ACK from the decompressor, and allows the compressor to switch back to the normal mode, i.e. use the present number of least significant bits of CD_SN. These ACKs are referred to as periodic ACKs. ACKs may be non-periodic as described below when, for example, the channel on which the ACKs are sent is busy which requires the ACK to be delayed in a non-periodic manner.

To account for the round trip delay, the decompressor of the receiver needs to anticipate when to send a periodic ACK. The decompressor has to send a periodic ACK early enough so the compressor normally receives ACKs at least once every seq_cycle. Taking into account the round trip time, the decompressor has to send ACKs at least once every (seq_cycle - N_RT) headers. The quantity N_RT is calculated as EST_RTT/T_H, rounded up to the next higher integer. The quantity EST_RTT is an estimate of the current round trip delay calculated by the decompressor and can be either evaluated dynamically based on recent measurements, or simply set to RTT_n (defined below). In practice, T_H can be derived either from the codec characteristics of the transmitter, or from the actual spacing observed.

Assumptions

In order to ensure correctness and achieve high performance, some assumptions need to be made about the communications channel between the compressor and the decompressor (CD-CC). The channel could be a link or a concatenation of links (network or networks).

Packets transferred through the forward and reverse channel may be lost or corrupted, but their orders are maintained (i.e., FIFO pipe). The quantity MAX_EB is defined as the maximum number of consecutive packets that could be lost over the CD-CC. In practice, for cellular links, MAX_EB is enforced by the lower layers of the protocol stack which decide to drop the connection when a threshold of consecutive lost packets is reached.

The channel may perform fragmentation at and reassembly at the decompressor, but preserves and provides the length of packets being transferred. Note that this fragmentation is different from IP fragmentation.

This scheme assumes there is a mechanism to detect errors between the compressor and decompressor. It is assumed the channel provides that error detection. If no error detection is available from the channel, the scheme can be extended in a straightforward fashion by adding an error detection code at the compressor-decompressor level. Error correction is beneficial but optional.

The round-trip delay between the compressor and decompressor is defined as the time to send and process a header(n), to process it, and return an ACK(n). To avoid any ambiguity on which original message is being ACKed, the ACK must not experience a round trip delay so long that the (CD_SN)$\ell$_extended in the forward direction has wrapped around. It is reasonable to assume that the time to send header(n) and process it are bounded, due to the real-time traffic requirements. The time to return ACK(n) depends on the reverse channel used to transmit it. For example, if the channel is contention-based, it may experience queuing delay. The lower layers are assumed to enforce a delay limit on the transmission of ACK, if necessary by discarding those ACKs which have stayed in the queue for too long. Based on these considerations, it is assumed there is an upper bound of the round trip delay: RTT_UB. In addition, there is a nominal round trip delay, denoted RTT_n, which is the most likely round trip delay during normal operation. Obviously RTT_n < RTT_UB. Estimation of RTT_n should be made before implementation, since RTT_n is used to determine the optimal value of k (see below for explanation). Note that at run time, the receiver needs to estimate the actual round trip delay. Details are discussed below.

Based on assumption 1 and 4, to guarantee the correctness of the proposed scheme, the value of $\ell$_extended should satisfy the following conditions:

1. $2^{\ell\_extended}$ * T_H $\geq$ RTT_UB, where T_H is the time spacing between two consecutive headers; this is required to avoid ambiguity on the ACK

2. $2^{\ell\_extended}$ > MAX_EB; this is required to maintain sequence synchronization even when long bursts occur

There is some flexibility to choose the value of $\ell$. However, in order to achieve optimal performance, it should be fine tuned based on the distribution of channel error bursts (both forward and reverse direction) and the round trip delay. Following are some considerations:

3. $2^k$ * T_H $\geq$ RTT_n, to reduce the chance of the compressor switching to the extended mode due to late ACKs.

4. $2^k$ > the most likely number of consecutive packet losses. This is needed to reduce the chance that the compressor switches to the extended mode due to long error bursts.

5. K should not be too small. Otherwise, too many periodic ACKs will be sent from the decompressor to the compressor, causing flooding of the reverse channel and lowering of the compression efficiency. On the other hand, a large value of k will result in overhead carried in every header.

The basic concept is that, when the channel condition deteriorates, the compressor and the decompressor fallback using (CD_SN) $\ell$_extended bits to guarantee correctness. On the other hand, it will use shorter (CD_SN) k bits during normal channel conditions to achieve best efficiency. Details of switching between the two modes are discussed below.

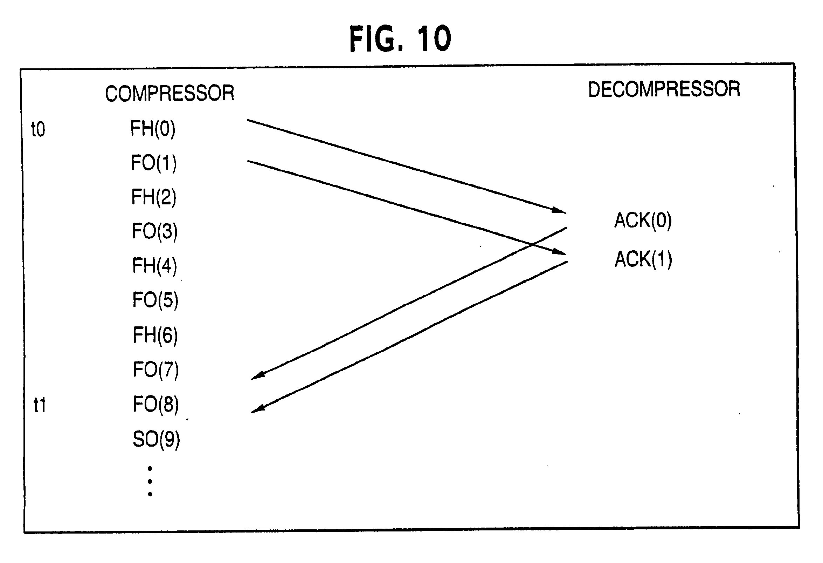

Fig. 10 illustrates a bandwidth reduction embodiment which sends at least one sequence of data packets, which transition in each sequence between different states of header consumption, from the compressor to the decompressor before an acknowledgment (ACK), generated by the decompressor, is received by the compressor to cause the compressor to transition the header compression to a greater degree of header compression. Because the compressor periodically, before receiving any acknowledgment, transmits headers with at least some compression, the resultant smaller number of bits transmitted before receiving an acknowledgment saves bandwidth. In the initialization phase, the compressor may, without limitation, alternate between full headers (FH) and first order headers (FO), i.e., a set of FH, then a set ofFO, then a set of FH, then a set ofFO, and so on, until an ACK is received. The sets may each include at least one header. The decompressor transmits an ACK when it correctly receives a FH. In Fig. 10, the alternate FH and FO headers are transmitted one after another, i.e., FH(0), F0(1), FH(2), FO(3), until the compressor receives the ACK (0) for packet 0 and uses the FH(0) as reference header from then on for decompression.

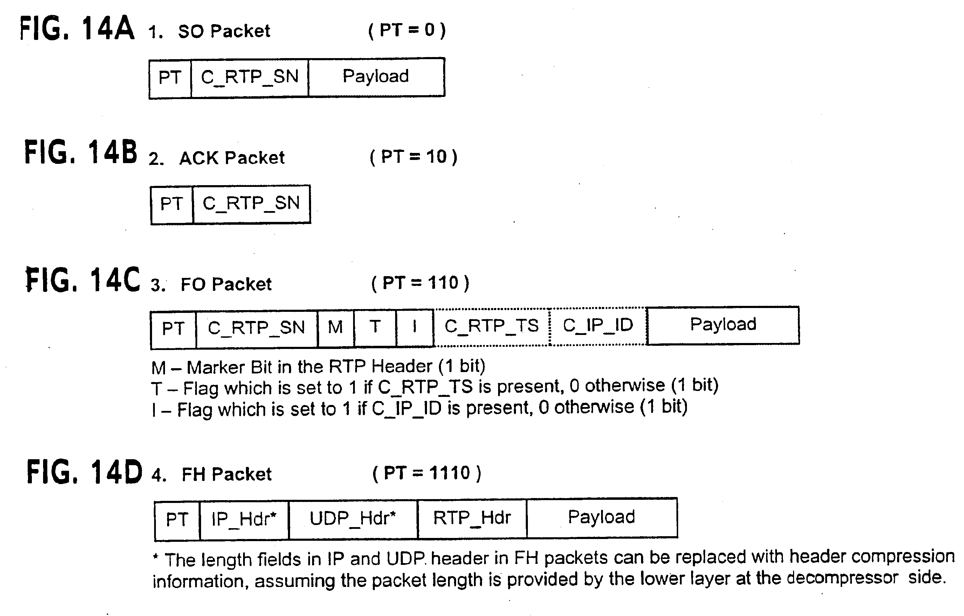

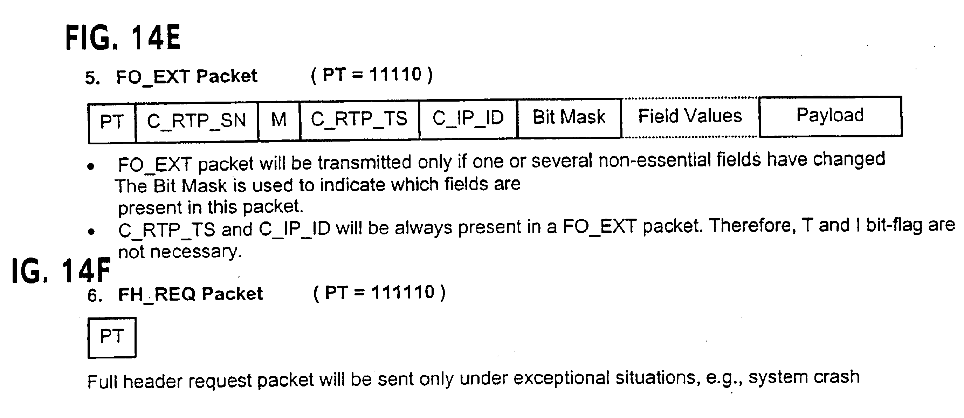

Figs. 14A-F illustrate an example of the format of SO, ACK, FO, FH, FO EXT and FH REQ packets which may be used with the practice of the present invention. The following abbreviations apply: PT is the packet type, C_RTP_ SN is the compressed RTP sequence number, C_RTP_TS is the compressed RTP time stamp and C_IP_ID is the compressed IP_ID. However, it should be understood that the present invention is not limited thereto. The PT field for the SO packet may be encoded as 0, the ACK packet as 10, the FO packet as 110, the FH packet as 1110, the FO_ EXT packet as 11110 and the FH_REQ packet as 111110. In the FO and FO_EXT packets, M is a one bit marker in the RTP header. In the FO packet, T is a one bit flag which 1 if C_RTP_TS is present and zero otherwise and I is a one bit flag which is set to if C_IP_ID is present and is zero otherwise. In FH packets, IP and UDP headers can be compressed if the packet length is provided by a lower layer at the decompressor. The FO_EXT packet is transmitted only if several non-essential fields have change; the bit mask is used to indicate which fields are present and C_RTP_TS and C_IP_ ID is always be present making T and I bit flags not necessary. Finally, the FH_REQ packet is sent only under exceptional circumstances, such as a system crash.

A context identifier (CID) field may need to be added to each of the above headers if multiple RTP flows are compressed and the lower layer does not provide differentiation among flows. The CID may only be needed for one direction, such as in a cellular system when the mobile station (MS) has only one RTP flow in each direction, and CID is not needed for downlink traffic (including ACKs). The quantity CID must be included for uplink traffic (including ACKs) since the decompression at the network side always handles multiple flows.

The following is an example of pseudo code which may be used to write code for the compressor.

This example illustrates the case where two ACKs are needed to transition from the update phase to the extrapolation phase. For simplicity, the alternation of FH and FO packets, as illustrated in Fig. 8 and the sequence number compensation are not shown in the pseudocode.

In this example, S_DFOD and R_DFOD are assumed non-static. They are therefore determined by the compressor and decompressor on a dynamic basis as follows:

• The quantity S_DFOD is calculated as CFO(m) when the compressor received ACK(n) and ACK(n-p) and $(n-p) \geq$ N_Last_Interr. Note that p is not necessarily equal to 1.
• The decompressor calculates R_DFOD when it receives the first SO packet after a non-SO packet. The quantity R_DFOD is calculated by using a linear extrapolation based on the last two acknowledged headers stored in OAW 135.

The compressor's behavior can be modeled as a state machine, specified by the table below.

To address the counter wrap-around and long error burst problem, the compressor expects to receive an ACK at least once every seq_cycle headers, and maintains an extended flag. If the flag is true, the compressor shall operate in the extended mode, i.e. send $(CD\text{-}SN)\ell\_extended$. Otherwise, it sends $(CD\text{-}SN)k$. The extended flag is set to true whenever N_elapsed > seq_cycle. Otherwise, it is set to false. Note that N_elapsed keeps increasing unless the transmitter receives an ACK (refer to pseudo code for details). In the extended mode, if ext_cycle have elapsed without an acknowledgment, the transmitter transitions to FH state.

The compressor enters the SO state when at least two packets with $CD\_SN \geq$ N_Last_Interr have been acknowledged. Then it sets S_DFOD equal to the most recent CFO.

Initially, the compressor starts the session in the FH state. The HSW 117 is empty. The quantity N_elapsed is set to zero. Extended_flag is set to false.

Extra procedures need to be executed in the case of handoff. For simplicity, they are not included here.

## FH state

| Event | Action |
|---|---|
| receive ACK(n) for FH(n) | • *see* compressor processing ACK(n) *pseudo code*<br>• state ← FO_STATE; |

In the FH state, the procedure to send header(n) is

```
{
    calculate CFO(n) and update N_Last_Interr;
    send as FH(n);
     store header(n) in HSW, color B red; /* n in FH is coded in
     k_extended bits */
     }
```

## FO state

| Event | Action |
|---|---|
| receive ACK(n) for FO(n, m) | • *see* Compressor processing ACK(n) *pseudo code* |
| Receive FH_Req | • state ← FH_STATE; |

In the FO state, the procedure to send header(n) is

```
{
        calculate CFO(n) and update N_Last_Interr;
        if N_elapsed >= seq_cycle
                extended_flag B TRUE;
        else
                extended_flag B FALSE;
        if {N_elapsed >= ext_cycle
        {
                send FH(n), store header(n) in SHW, color B red;
                state β FH_STATE;
                N_elapsed B 0;
        }
        if received more than two ACKs, AND the most recent two CD_SNs ACKed >=
        N_Last_Interr
        {
                S_DFOD B CFO(n);
                send SO(n), store header(n) in HSW, color B current_color(); /* see
                function below */
                state B SO_STATE;
        }
        else
                send FO(n, S_RFH); store header(n) in HSW, color B current_color();
                } N_elapsed B N_elapsed + 1;
                }
                current_color() {
        if extended_flag = TRUE
                return red;
        else
                return green;
                }
```

**SO state**

| Event | Action |
|-------|--------|
| Receive ACK(n) | • *see* compressor processing ACK(n) *pseudo code* |
| Receive FH_Req | • State ← FH_STATE |

In the SO state, the procedure to send header(n) is

```
{
        calculate CFO(n) and update N_Last_Interr;
        if N_elapsed >= seq_cycle
                extended_flag B TRUE;
        else
                extended_flag B FALSE;
        if N_elapsed >= ext_cycle
         {
                send FH(n), store header(n) in SHW, color = red;
                state B FH_STATE;
                N_elapsed B 0;
        }
        if CFO(n) = S_DFOD
                send SO(n); store header(n) in HSW, color B current_color();
        else
        {
                send FO(n, S_RFH); store header(n) in HSW, color B current_color();
                state B FO_STATE;
        }
```

```
N_elapsed BN_elapsed + 1;
}
Compressor processing ACK(n)
{
if color of ACK(n) is green /* n is coded in k bits */
        h_ack β a green header in HSW 117 whose (CD_SN)k = n; /* see below for
        detailsr */
else /* n is coded in k_extended
bits */
        h_ack β a red header in HSW 117 whose (CD_SN)k_extended = n;
S_RFH β CD_SN of h_ack;
Delete all headers in HSW precding (older than) h_ack;
Move h_ack to Header(S_RFH);
N_elapsed β Diff(current|CD_SN, S_RFH): |
}
```

It can be proved that in the bove procedure, one and oly one header in the HSW 117 can be correctly identified as the header being ACKed, in other word(s), there will be no ambiguity of the ACK. If the ACK(n) is red, i.e., n is coded using $\ell$_extended bits, only one red header can match the ACK, since there are at most $2^{\ell\text{\_extended}}$ headers in the HSW 117. Otherwise, if the ACK(n) is green, we will show that it can still be uniquely map to a green header in HSW 117.

Assume a snapshot of the HSW 117 is taken every time after the compressor sends a packet, and represents it with a string of letter Rs (for red headers) and Gs (for green headers). Let S be the string corresponding to an arbitrary snapshot. Note that S starts with the oldest packet sent by the transmitter, and ends with the youngest one. Furthermore, between the sending of two consecutive packets by the compressor, the string S does not change unless an ACK arrives during the time, which will some letters from the beginning of the S.

Now, let G1 denote the rightmost (youngest) G in S, and S1 as the prefix of S up to (including) G1. Then there are only two possible cases, as shown below.

$$\vdash\!\!-\!\!-\ \ -\!\!-\!\!-\ \ -\!\!-\!\!-\qquad S \qquad\qquad \vdash\!\!-\ \ -\!\!-\qquad S$$

$$X\ X \!-\! X\ G1\ R\ \text{---}R \qquad\qquad X\ X \!-\! X\ G1$$

$$\vdash\!\!-\ \ -\!\!-\!\!\dashv`\quad S1 \qquad\qquad \vdash\!\!-\ \ -\!\!\dashv\ \cdot\qquad S1$$

Case 1                                            Case 2

Let len(S1) denote the length of S1. In case 1, since there is an R after G1, len(S1) must be equal to seq_cycle ($=2^k$). Otherwise, the compressor would not have sent the packet after G1 as a red one. In case 2, len (S1) s seq_cycle must be true. Otherwise, the compressor would have sent G 1 as a red one. Therefore, in either case, len(S1) is less or equal to seq_cycle.

Since G 1 is the rightmost green letter in S, it is proven that at most $2^k$ green header can exist in HSW 117 at any time. Thus, when a green ACK is received by the compressor, the k-bit CD_SN in the ACK can be used to uniquely identify a green header in the HSW.

Note that the decompressor must cooperate with the compressor to ensure that synchronization of CD_SN is maintained during the transition between the two modes. First, if the decompressor receives a red packet and it decides to ACK that packet, it must send a red ACK carrying (CD_SN)$\ell$_extended.

Second, if the decompressor receives an FO packet, FO(n, m), the correct reference header must be the youngest (most recent) header in OAW 135, whose least significant k (if m is k-bit) or $\ell$_extended (if m is k_extended-bit) bits match m. Note that this relies on the assumption that, in each direction, the channel behaviors like a FIFO.

Fig. 19 illustrates the second condition. In this example, NT0 and NT2 are the values of CD_SN at time T0 and T2, respectively. Suppose at T1, the compressor sends packet ACK(NT0), in which NT0 is coded in $\ell$_extended bits. At T2, the compressor receives the ACK(NTO). It then calculates N_elapsed equal to (NT2-NT0) and finds out that N_elapsed<seq_cycle. At the same time, a RTP packet arrives at the compressor and the compressor decides to send it as an FO packet, using header(NT0) as reference. Since N_elapsed<seq_cycle($=2^k$), the NT2 and NT0 in the FO packet are coded in k bits. At T3, the FO arrives at the decompressor. To retrieve the correct reference header, the decompressor simply searches its OAW from tail (the most recent) to head (the oldest), and finds the first header whose least significant k bits of its CD_SN match (NT0)k.

Note that at T3, the OAW 135 of the decompressor may contain more than $2^k$ headers. However, the above operation always gives the correct reference header. Because of the FIFO property of the forward channel, whatever received (and thus Acked) by the decompressor between T1 and T3, must be sent by the compressor between T0 and T2. In other words, if A denotes the set of the headers in OAW 135 that were added after header (NT0), and B the set of headers in HSW 117 at T2, then $A \subseteq B$ always holds. Since $|A| < 2^k$, we have $|B| < 2^k$. Therefore, there are no two headers in set B such that the least significant k bits of their CD_SNs match (NT0)k in the packet FO(NT2, NT0).

The following is an example of pseudo code for the decompressor:

The decompressor is mostly driven by what is received from the compressor (i.e. FH, FO or SO).

In what follows, "correctly received" means no error is detected in the received header (either FH, FO or SO). Besides aforementioned state information, the decompressor also maintains a copy of the last reconstructed header, i.e., header (R_Last_Decomp). When receiving an FO packet the decompressor will use the procedure described above with reference to the pseudo code of the compressor to retrieve the correct reference header.

If FH(n) is correctly received

```
{
     reconstruct header(n) from FH(n);
     send ACK(n);
     R_Last_Acked←n;
    store header(n) in the OAW 135 and also header(R_Last_Decomp);
    }
    if FO(n, m) is correct received
    {
    if header(m) cannot be found in the OAW 135 /* could only happen due to system failures
    */
             Send FH_Req;
     else
             retrieve header (m) fro the OAW 135 or header (R_RFH);
             delete headers in OAW that are older than header (R_RFH);
             reconstruct header(n)-FO_DIFF(n, m) + header(m);
             if R_RFH!=m
                     R_RFH-m and store header(m) as header(R_RFH);
             if FO(n, m) is one of the first two FO packets received or
                     N_RT FO packets have been received since last ACKed FO packet
             {
                     Send ACK(n);
                     R_Last_Acked←n; store header (n) in the OAW:
              }
             store reconstructed header (n) in header(R_Last_Decomp);
    }
If SO(n) is correctly received
{
     if it's the first SO packet after a non-SO packet
     {
             find the two most recently reconstructed headers in OAW 135;
             if not found /* could only happen due to system
    failure */
                     Send FH_Req;
             else /*let the two headers be header (p) and
    header (q), p<q*/
                     R_DFOD+FO_DIFF(q,p)/Diff(q,p);
     }
     reconstruct header(n)←R_DFOD * Diff(n, R_Last_Decomp) +
     header(R_Last_Decomp);
     store header(n) in header(R_Last_Decomp);
     if 1) (seq_cycle - N_RT) packets have elapsed since R_Last_ACKed, or,
     /* time to send a periodic ack */
       2) extended_flag in SO is ON and this is the first such packet, or,
          /* the compressor switches to extended mode; send ack so the compressor returns
    to normal mode */
```

```
3) received more than N_RT packets with extended_flag ON since R_Last_ACK
   /* the previous ack was apparently not received; send another ack */
 {
   Send ACK(n); n is coded in extended mode if conditions 2 or 3 are met
   R_Last_Acked←n:
   store Header (n) in the OAW;
 }
}
   store header(n) in the OAW 135 and also header(R_Last_Dccomp);
}
if FO(n, m) is correctly received
{
   ifheader(m) cannot be found in the OAW 135 5 /* could only happen due to system failures
   */
           Send FH_Req;
   else
    {
           retrieve header (m) fro the OAW 135 or header (R_RFH);
           delete headers in OAW that are older than header (R_RFH);
           reconstruct header(n)←FO_DEFF(n, m) + header(m);
           if R_RFH!=m
                   R_RFH←m and store header(m) as header(R_RFH);
           if FO(n, m) is one of the first two FO packets received or
                   N_RT FO packets have been received since last ACKed FO packet
           {
                   Send ACK(n);
                   R_Last_Acked-n; store header (n) in the OAW:
           }
           store reconstructed header (n) in header(R_Last_Decomp);
}
If SO(n) is correctly received
{
   if it's the first SO packet after a non-SO packet
   {
           find the two most recently reconstructed headers in OAW 135;
           if not found /* could only happen due to system
   failure */
                   Send FH_Req;
           else /*let the two headers be header (p) and
   header (q), p<q*/
                   R_DFOD+FO_DIFF(q,p)/Diff(q,p);
   }
   reconstruct header(n)←R_DFOD * Diff(n, R_Last_Decomp) +
   header(R_Last_Decomp);
   store header(n) in header(R_Last_Decomp);
   if 1) (seq_cycle - N_RT) packets have elapsed since R_Last_ACKed, or,
   /* time to send a periodic ack */
    2) extended_flag in SO is ON and this is the first such packet, or,
     /* the compressor switches to extended mode; send ack so the compressor returns
     to normal mode */
    3) received more than N_RT packets with extended_flag ON since R_Last_ACK
      /* the previous ack was apparently not received; send another ack */
   {
     Send ACK(n); n is coded in extended mode if conditions 2 or 3 are met
     R_Last_Acked←n:
    store Header (n) in the OAW;
   }
   }
```

HSW 117 and OAW 135

In the worst case, where the round trip delay is actually equal to RTT_UB, the OAW 135 or HSW 117 may need to hold $2^{\ell\text{-extended}}$ headers. However, that is very unlikely to happen. In most cases, less than $2^k$ entries need to be maintained in the HSW 117 or OAW 135. In practice this means a pretty small number of entries for both OAW and HSW. For example, 16 (k=4) entries will provide 320 msec of round trip time, assuming a 20 msec spacing per packet.

Static fields do not need to be stored as multiple entries in HSW 117 or OAW 135. Only a single copy of the static fields is needed.

In RFC 2508, each compressed header carries a sequence number. In most cases, the sequence number is enough to reconstruct the full header by linear extrapolation. For those packets where linear extrapolation would result in incorrect header reconstruction, the compressor sends a first order difference information with respect to the immediately preceding packet. Thus, the loss of a packet will invalidate subsequent packets with compressed headers, since the lost packet could be carrying FO difference information. RFC 2508 relies solely on the 4-bit sequence number to detect packet losses. The sequence number wraps around every 16 packets. When an error burst longer than 16 packets occurs, there is a 1 in 16 probability of not detecting errors, which is unacceptably high. Furthermore, even if the decompressor were able to detect errors, to recover from errors, the decompressor has to request the compressor to send a large size header by sending a CONTEXT_STATE message. Thus there is a round trip delay incurred before the requested header reaches the receiver. In the case of real-time conversational traffic, this delay translates into a break in the conversation. In addition, sending a large size header is expensive in terms of bandwidth.

An embodiment of the present invention uses a k-bit sequence number (k could be set equal to 4) for linear extrapolation. Like RFC 2508, when linear extrapolation would result in incorrect header reconstruction, the compressor sends a FO difference information. Unlike RFC 2508, the difference is calculated with respect to a reference packet known to be correctly received. That packet is not necessarily the one immediately preceding the current packet. This feature ensures that the current header can be reliably reconstructed even if one or more past packets were lost. Since the header can be reliably reconstructed in that manner, there is no need to send a full header. The first order difference information can most of the time be encoded with fewer bits than the absolute value of the full header. The FO difference header has an additional field that carries the reference number, i.e. sequence number of the reference packet. To guarantee that errors will be detected even in the present of long error bursts, the decompressor sends an ACK frequently enough so that the compressor receives an ack at least once every seq_cycle packets. In the absence of such an ACK, the compressor will presume that there may be a long error burst. In most cases, it is then enough that the compressor simply switch to a $\ell$_extended-bit sequence number, where $\ell$_extended is large enough to avoid any ambiguity. In any event, the loss of a packet will not invalidate subsequent packets with compressed headers. Therefore, when the decompressor detects a packet loss, it does not have to request retransmission.

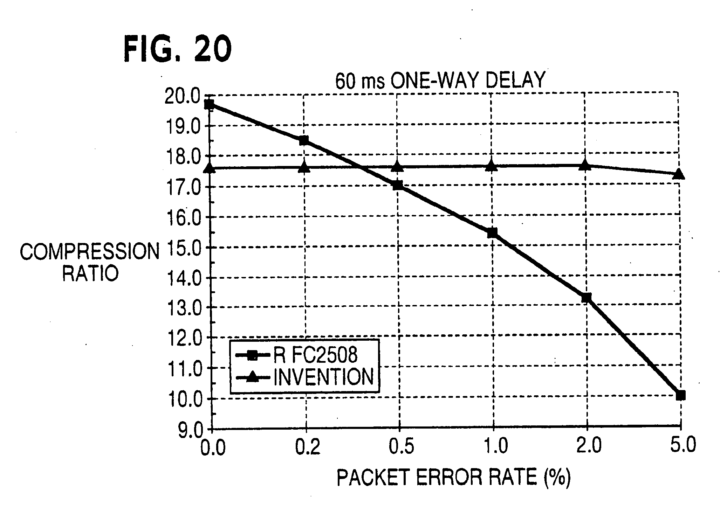

Fig. 20 below shows comparative results of prior art RFC 2508 with the invention. One way (fixed) delay of 60ms is assumed in this test. The inter spacing between RTP packets is 30ms. The random error model is used with different average packet error rates. The compression ratio is defined as the ratio between average size of compressed headers and the size of the original IP/UDP/RTP headers. Note that with the invention, the size of ACK packets is included in the calculation of the average compressed header size. The invention outperforms the RFC 1508 as soon as the packet error rate is higher than 0.4%.

The robust scheme of the invention requires the compressor and decompressor to maintain the HSW 117 and OAW 135 queues, respectively. Assuming that the roundtrips are less than 320 msec, the size of the queues is 16 entries + one copy of the static fields.

|  | lpv4 | lpv6 |
| --- | --- | --- |
| Size of static fields (in bytes) | 18 | 40 |
| Size of one entry (in bytes) | 22 | 20 |
| Total size of HSW or OAW for one bi-directional session (in bytes) | (16*22 + 18)* 2 = 740 | (16*20 + 40)*2 = 720 |

About I megabyte of memory will allow to handle more than 1400 sessions simultaneously. The processing load to manage the queues is very moderate, as it involves pointer manipulation.

While the invention has been described in terms of its preferred embodiments, it should be understood that numerous modifications of the invention may be made without departing from the scope of the invention. It is intended that such modifications fall within the scope of the appended claims.

## Claims

**1.** A method of operating a decompressor (115, 137) in a system having a transmitter (110, 120) transmitting a plurality of packets each containing a header to a receiver (130, 150), the method comprising decompressing a compressed header contained in a current packet received by the receiver by:

determining with a counter (134) at the receiver an elapsed time $\Delta t$ between consecutively received packets, the elapsed time $\Delta t$ being the difference between times at which the current packet and an immediately previously received packet were received;

determining if the elapsed time $\Delta t$ is greater than or equal to a time lapse indicating that at least one packet is missing between the current packet and the immediately previously received packet;

processing the elapsed time $\Delta t$ indicating that at least one packet is missing to determine a number of missing packets between the immediately previously received packet and the current packet;

adding the number of missing packets to a packet number of the immediately previously received packet to update a number of the current packet in a sequence of transmission of the plurality of packets; and

decompressing the compressed header of the current packet using the updated number of the current packet.

2. A method in accordance with claim 1 wherein the header of the current packet is a second order compressed header.

3. A method in accordance with claim 1 or 2 wherein:

the number of missing packets is calculated as $i*SEQ\_CYCLE+DIFF (n_2, n_1)$ if $(DIFF(n_2, n_1) + i*SEQ\_CYCLE) *(t$ time units$) \leq \Delta t < (DIFF(n_2, n_1) + (i+1)*SEQ\_CYCLE)*(t$ time units$)$, wherein i is a whole number equal to or greater than zero, $n_2$ is a sequence number of the current packet in a sequence of transmission of the packets, $n_1$ is a sequence number of the immediately previously received packet in the sequence of transmission of the packets, SEQ_CYCLE is equal to $2^k$ wherein k is the number of bits of the sequence number, $DIFF(n_2, n_1)$ is the difference in sequence number between the current and immediately previously received packets and where $DIFF(n_2, n_1)=n_2-n_1$ when $n_2>n_1$ and $DIFF(n_2, n_1) = n_2+2^k-n_1$ when $n_2 \leq n_1$, and wherein t time units is the time interval between consecutive packets.

4. A method in accordance with any preceding claim wherein decompressing the compressed header comprises using linear extrapolation.

5. A method in accordance with claim 4, wherein linear extrapolation comprises calculating an RTP time stamp TS of the current packet as $TS(n_2) = TS(n_1) + N_{loss}*(TS\_STRIDE)$ and calculating an RTP sequence number SEQ of the current packet as $SEQ(n_2) = SEQ(n_1) + N_{loss}$, wherein TS_STRIDE is an RTP TS increment every t time units, and $N_{loss}$ is the number of missing packets.

6. A method in accordance with any preceding claim comprising resetting the counter (134) after determining the elapsed time $\Delta t$.

7. A method in accordance with any preceding claim wherein k is four.

8. A receiver (130, 150) which is arranged to receive a plurality of transmitted packets each containing a header; wherein the receiver comprises a counter (134) which is arranged to determine an elapsed time $\Delta t$ between consecutively received packets, the elapsed time $\Delta t$ being the time difference between a time of receiving at the receiver a current packet and a time of receiving at the receiver an immediately previously received packet, the receiver being arranged to determine if the elapsed time $\Delta t$ is greater than or equal to a time lapse indicating that at least one packet is missing between the current packet, to processes the elapsed time $\Delta t$, to add the number of missing packets to a packet number of the immediately previously received packet to update a number of the current packet in a sequence of transmission of the plurality of packets, and to decompress the compressed header of the current packet using the updated number of the current packet.

9. A receiver in accordance with claim 8 wherein the header of the current packet is a second order compressed header.

10. A receiver in accordance with claim 8 or 9 wherein:

the receiver (130, 150) is arranged to calculate the number of missing packets as $i*SEQ\_CYCLE+DIFF (n_2, n_1)$ if $(DIFF(n_2, n_1) + i*SEQ\_CYCLE)* (t$ time units$) \leq \Delta t < (DIFF(n_2, n_1) + (i+1)*SEQ\_CYCLE)*(t$ time units$)$, wherein i is a whole number equal to or greater than zero, $n_2$ is a sequence number of the current packet in a sequence of transmission of the packets , $n_1$ is a sequence number of the immediately previously received packet in the sequence of transmission of the packets , SEQ_CYCLE is equal to $2^k$ wherein k is the number of bits of the sequence number, DIFF($n_2$, $n_1$) is the difference in sequence number between the current and immediately previously received packets and where DIFF($n_2$, $n_1$)=$n_2$-$n_1$ when $n_2$>$n_1$ and DIFF($n_2$, $n_1$) = $n_2$+$2^k$-$n_1$ when $n_2$ $\leq n_1$, and wherein t time units is the time interval between consecutive packets.

11. A receiver in accordance with claim 10, wherein the receiver (130, 150) is arranged to calculate an RTP time stamp TS of the current packet as TS($n_2$) = TS($n_1$) + $N_{loss}$ *(TS_STRIDE) and to calculate an RTP sequence number SEQ of the current packet as SEQ($n_2$) = SEQ($n_1$) + $N_{loss}$, wherein TS_STRIDE is an RTP TS increment every t time units, and $N_{loss}$ is the number of missing packets.

12. A receiver in accordance with any one of claims 8 to 11, wherein the receiver (130, 150) is arranged to reset the counter (134) after determining the elapsed time $\Delta t$.


**Patentansprüche**

1. Verfahren zum Betreiben eines Dekompressors (115, 137) in einem System, das einen Sender (110, 120) hat, der mehrere Pakete, von denen jedes einen Header enthält, zu einem Empfänger (130, 150) überträgt, wobei das Verfahren das Dekomprimieren eines komprimierten Headers umfasst, der in einem aktuellen Paket enthalten ist, das vom Empfänger empfangen wurde, und dies durch Folgendes:

   Bestimmen mit einem Zähler (134) am Empfänger einer verstrichenen Zeit $\Delta t$ zwischen aufeinanderfolgend empfangenen Paketen, wobei die verstrichene Zeit $\Delta t$ die Differenz zwischen den Zeitpunkten ist, zu denen das aktuelle Paket und ein unmittelbar vorhergehend empfangenes Paket empfangen wurden;
   Feststellen, ob die verstrichene Zeit $\Delta t$ größer oder gleich einer Zeitspanne ist, die anzeigt, dass wenigstens ein Paket zwischen dem aktuellen Paket und dem unmittelbar vorhergehend empfangenen Paket fehlt;
   Verarbeiten der verstrichenen Zeit $\Delta t$, die anzeigt, dass wenigstens ein Paket fehlt, um eine Zahl fehlender Pakete zwischen dem unmittelbar vorhergehend empfangenen Paket und dem aktuellen Paket zu bestimmen;
   Addieren der Zahl fehlender Pakete zu einer Paketnummer des unmittelbar vorhergehend empfangenen Pakets zum Aktualisieren einer Nummer des aktuellen Pakets in einer Übertragungssequenz der mehreren Pakete; und
   Dekomprimieren des komprimierten Headers des aktuellen Pakets unter Verwendung der aktualisierten Nummer des aktuellen Pakets.

2. Verfahren nach Anspruch 1, wobei der Header des aktuellen Pakets ein Header mit einer Kompression zweiter Ordnung ist.

3. Verfahren nach Anspruch 1 oder 2, wobei Folgendes gilt:

   die Zahl fehlender Pakete wird entsprechend i*SEQ_CYCLE + DIFF($n_2$,$n_1$) berechnet, falls (DIFF($n_2$,$n_1$) + i*SEQ_CYCLE) * (t Zeiteinheiten) $\leq \Delta t$ < (DIFF($n_2$,$n_1$) + (i+1)*SEQ_CYCLE) * (t Zeiteinheiten) gilt, wobei i eine ganze Zahl größer oder gleich null ist, $n_2$ eine Sequenznummer des aktuellen Pakets in einer Übertragungssequenz der Pakete ist, $n_1$ eine Sequenznummer des unmittelbar vorhergehend empfangenen Pakets in der Übertragungssequenz der Pakete ist, SEQ_CYCLE gleich $2^k$ ist, wobei k die Zahl der Bits der Sequenznummer ist, DIFF($n_2$,$n_1$) die Differenz in der Sequenznummer zwischen dem aktuellen und dem unmittelbar vorhergehend empfangenen Paket ist und wobei DIFF($n_2$,$n_1$) = $n_2$ - $n_1$, falls $n_2$ > $n_1$, und DIFF($n_2$,$n_1$) = $n_2$ +$2^k$ - $n_1$, falls $n_2 \leq n_1$, und wobei t Zeiteinheiten die Zeitspanne zwischen aufeinanderfolgenden Paketen ist.

4. Verfahren nach einem der vorhergehenden Ansprüche, wobei das Dekomprimieren des komprimierten Headers die Verwendung einer linearen Extrapolation umfasst.

5. Verfahren nach Anspruch 4, wobei die lineare Extrapolation Folgendes umfasst: das Berechnen eines RTP-Zeitstempels TS des aktuellen Pakets entsprechend TS($n_2$) = TS($n_1$) + $N_{loss}$ * (TS_STRIDE) und das Berechnen einer RTP-Sequenznummer SEQ des aktuellen Pakets entsprechend SEQ($n_2$) = SEQ($n_1$) + $N_{loss}$, wobei TS_STRIDE ein RTP-TS-Inkrement alle t Zeiteinheiten ist und $N_{loss}$ die Zahl fehlender Pakete ist.

6. Verfahren nach einem der vorhergehenden Ansprüche, das das Zurücksetzen des Zählers (134) nach dem Bestimmen der verstrichenen Zeit $\Delta t$ umfasst.

**7.** Verfahren nach einem der vorhergehenden Ansprüche, wobei k gleich vier ist.

**8.** Empfänger (130, 150), der dafür eingerichtet ist, mehrere übertragene Pakete zu empfangen, von denen jedes einen Header enthält; wobei der Empfänger einen Zähler (134) umfasst, der dafür eingerichtet ist, eine verstrichene Zeit Δt zwischen aufeinanderfolgend empfangenen Paketen zu bestimmen, wobei die verstrichene Zeit Δt die Differenz zwischen einem Zeitpunkt, zu dem am Empfänger ein aktuelles Paket empfangen wurde, und einem Zeitpunkt, zu dem am Empfänger ein unmittelbar vorhergehend empfangenes Paket empfangen wurden, ist, wobei der Empfänger für Folgendes eingerichtet ist:

Feststellen, ob die verstrichene Zeit Δt größer oder gleich einer Zeitspanne ist, die anzeigt, dass wenigstens ein Paket zwischen dem aktuellen Paket fehlt, Verarbeiten der verstrichenen Zeit Δt, Addieren der Zahl fehlender Pakete zu einer Paketnummer des unmittelbar vorhergehend empfangenen Pakets zum Aktualisieren einer Nummer des aktuellen Pakets in einer Übertragungssequenz der mehreren Pakete, und Dekomprimieren des komprimierten Headers des aktuellen Pakets unter Verwendung der aktualisierten Nummer des aktuellen Pakets.

**9.** Empfänger nach Anspruch 8, wobei der Header des aktuellen Pakets ein Header mit einer Kompression zweiter Ordnung ist.

**10.** Verfahren nach Anspruch 8 oder 9, wobei Folgendes gilt:

der Empfänger (130, 150) ist dafür eingerichtet, die Zahl fehlender Pakete entsprechend $i*SEQ\_CYCLE + DIFF(n_2,n_1)$ zu berechnen, falls $(DIFF(n_2,n_1) + i*SEQ\_CYCLE) * (t$ Zeiteinheiten$) \leq \Delta t < (DIFF(n_2,n_1) + (i+1)*SEQ\_CYCLE) * (t$ Zeiteinheiten$)$ gilt, wobei i eine ganze Zahl größer oder gleich null ist, $n_2$ eine Sequenznummer des aktuellen Pakets in einer Übertragungssequenz der Pakete ist, $n_1$ eine Sequenznummer des unmittelbar vorhergehend empfangenen Pakets in der Übertragungssequenz der Pakete ist, SEQ_CYCLE gleich $2^k$ ist, wobei k die Zahl der Bits der Sequenznummer ist, $DIFF(n_2,n_1)$ die Differenz in der Sequenznummer zwischen dem aktuellen und dem unmittelbar vorhergehend empfangenen Paket ist und wobei $DIFF(n_2,n_1) = n_2 - n_1$, falls $n_2 > n_1$, und $DIFF(n_2,n_1) = n_2 + 2^k - n_1$, falls $n_2 \leq n_1$, und wobei t Zeiteinheiten die Zeitspanne zwischen aufeinanderfolgenden Paketen ist.

**11.** Verfahren nach Anspruch 10, wobei der Empfänger (130, 150) für Folgendes eingerichtet ist: das Berechnen eines RTP-Zeitstempels TS des aktuellen Pakets entsprechend $TS(n_2) = TS(n_1) + N_{loss} * (TS\_STRIDE)$ und das Berechnen einer RTP-Sequenznummer SEQ des aktuellen Pakets entsprechend $SEQ(n_2) = SEQ(n_1) + N_{loss}$, wobei TS_STRIDE ein RTP-TS-Inkrement alle t Zeiteinheiten ist und $N_{loss}$ die Zahl fehlender Pakete ist.

**12.** Empfänger nach einem der Ansprüche 8 bis 11, wobei der Empfänger (130, 150) dafür eingerichtet ist, den Zähler (134) nach dem Bestimmen der verstrichenen Zeit Δt zurückzusetzen.

**Revendications**

**1.** Procédé d'exploitation d'un dispositif de décompression (115, 137) dans un système présentant un émetteur (110, 120) transmettant une pluralité de paquets contenant chacun un en-tête à un récepteur (130, 150), le procédé comprenant l'étape consistant à décompresser un en-tête compressé contenu dans un paquet en cours reçu par le récepteur au moyen des étapes ci-dessous consistant à :

déterminer, avec un compteur (134), au niveau du récepteur, un temps écoulé Δt entre des paquets reçus consécutivement, le temps écoulé Δt représentant la différence entre les instants auxquels le paquet en cours et un paquet reçu immédiatement précédemment ont été reçus ;
déterminer si le temps écoulé Δt est supérieur ou égal à un laps de temps indiquant qu'au moins un paquet est manquant entre le paquet en cours et le paquet reçu immédiatement précédemment ;
traiter le temps écoulé Δt indiquant qu'au moins un paquet est manquant, en vue de déterminer un nombre de paquets manquants entre le paquet reçu immédiatement précédemment et le paquet en cours ;
ajouter le nombre de paquets manquants à un numéro de paquets du paquet reçu immédiatement précédemment, en vue de mettre à jour un numéro du paquet en cours dans une séquence de transmission de la pluralité de paquets ; et

décompresser l'en-tête compressé du paquet en cours en utilisant le numéro mis à jour du paquet en cours.

2. Procédé selon la revendication 1, dans lequel l'en-tête du paquet en cours est un en-tête compressé de second ordre.

3. Procédé selon la revendication 1 ou 2, dans lequel :

le nombre de paquets manquants est calculé selon la formule ci-dessous :

$i * \text{SEQ\_CYCLE} + \text{DIFF}(n_2, n_1)$ si $(\text{DIFF}(n_2, n_1) + i * \text{SEQ\_CYCLE}) * (t$ unités de temps$) \leq \Delta t < (\text{DIFF}(n_2, n_1) + (i + 1) * \text{SEQ\_CYCLE}) * (t$ unités de temps$)$, dans lequel $i$ est un nombre entier égal ou supérieur à zéro, $n_2$ est un numéro de séquences du paquet en cours dans une séquence de transmission des paquets, $n_1$ est un numéro de séquences du paquet reçu immédiatement précédemment dans la séquence de transmission des paquets, SEQ\_CYCLE est égal à $2^k$, dans lequel $k$ est le nombre de bits du numéro de séquences, $\text{DIFF}(n_2, n_1)$ est la différence en termes de numéro de séquences entre les paquets en cours et reçus immédiatement précédemment, et où $\text{DIFF}(n_2, n_1) = n_2 - n_1$, lorsque $n_2 > n_1$, et $\text{DIFF}(n_2, n_1) = n_2 + 2^k - n_1$ lorsque $n_2 \leq n_1$, et dans lequel $t$ unités de temps représente l'intervalle de temps entre des paquets consécutifs.

4. Procédé selon l'une quelconque des revendications précédentes, dans lequel la décompression de l'en-tête compressé comprend l'utilisation d'une extrapolation linéaire.

5. Procédé selon la revendication 4, dans lequel l'extrapolation linéaire comprend le calcul d'une estampille temporelle RTP, TS, du paquet en cours, selon la formule $\text{TS}(n_2) = \text{TS}(n_1) + N_{loss} * (\text{TS\_STRIDE})$ et le calcul d'un numéro de séquences RTP, SEQ, du paquet en cours, selon la formule $\text{SEQ}(n_2) = \text{SEQ}(n_1) + N_{loss}$, dans lequel TS\_STRIDE est un incrément d'estampille TS RTP à chaque $t$ unités de temps, et $N_{loss}$ est le nombre de paquets manquants.

6. Procédé selon l'une quelconque des revendications précédentes, comprenant la réinitialisation du compteur (134) à l'issue de la détermination du temps écoulé $\Delta t$.

7. Procédé selon l'une quelconque des revendications précédentes, dans lequel $k$ est égal à quatre.

8. Récepteur (130, 150) agencé de manière à recevoir une pluralité de paquets transmis contenant chacun un en-tête ; dans lequel
le récepteur comprend un compteur (134) qui est agencé de manière à déterminer un temps écoulé $\Delta t$ entre des paquets reçus consécutivement, le temps écoulé $\Delta t$ représentant la différence entre un instant de réception, au niveau du récepteur, d'un paquet en cours et un instant de réception, au niveau du récepteur, d'un paquet reçu immédiatement précédemment, le récepteur étant agencé de manière à déterminer si le temps écoulé $\Delta t$ est supérieur ou égal à un laps de temps indiquant qu'au moins un paquet est manquant entre le paquet en cours et le paquet reçu immédiatement précédemment, à traiter le temps écoulé $\Delta t$, à ajouter le nombre de paquets manquants à un numéro de paquets du paquet reçu immédiatement précédemment en vue de mettre à jour un numéro du paquet en cours dans une séquence de transmission de la pluralité de paquets, et à décompresser l'en-tête compressé du paquet en cours en utilisant le numéro mis à jour du paquet en cours.

9. Récepteur selon la revendication 8, dans lequel l'en-tête du paquet en cours est un en-tête compressé de second ordre.

10. Récepteur selon la revendication 8 ou 9, dans lequel :

le récepteur (130, 150) est agencé de manière à calculer le nombre de paquets manquants par la formule ci-dessous :

$i * \text{SEQ\_CYCLE} + \text{DIFF}(n_2, n_1)$ si $(\text{DIFF}(n_2, n_1) + i * \text{SEQ\_CYCLE}) * (t$ unités de temps$) \leq \Delta t < (\text{DIFF}(n_2, n_1) + (i + 1) * \text{SEQ\_CYCLE}) * (t$ unités de temps$)$, dans lequel $i$ est un nombre entier égal ou supérieur à zéro, $n_2$ est un numéro de séquences du paquet en cours dans une séquence de transmission des paquets, $n_1$ est un numéro de séquences du paquet reçu immédiatement précédemment dans la séquence de transmission des paquets, SEQ\_CYCLE est égal à $2^k$, dans lequel $k$ est le nombre de bits du numéro de séquences, $\text{DIFF}(n_2, n_1)$ est la différence en termes de numéro de séquences entre les paquets en cours et reçus immédiatement précédemment, et où $\text{DIFF}(n_2, n_1) = n_2 - n_1$, lorsque $n_2 > n_1$, et $\text{DIFF}(n_2, n_1) = n_2$

$+ 2^k - n_1$ lorsque $n_2 \leq n_1$, et dans lequel t unités de temps représente l'intervalle de temps entre des paquets consécutifs.

11. Récepteur selon la revendication 10, dans lequel le récepteur (130, 150) est agencé de manière à calculer une estampille temporelle RTP, TS, du paquet en cours, selon la formule $TS(n_2) = TS(n_1) + N_{loss} * (TS\_STRIDE)$ et à calculer un numéro de séquences RTP, SEQ, du paquet en cours, sous la forme $SEQ(n_2) = SEQ(n_1) + N_{loss}$, dans lequel TS_STRIDE est un incrément d'estampille TS RTP à chaque t unités de temps, et $N_{loss}$ est le nombre de paquets manquants.

12. Récepteur selon l'une quelconque des revendications 8 à 11, dans lequel le récepteur (130, 150) est agencé de manière à réinitialiser le compteur (134) à l'issue de la détermination du temps écoulé $\Delta t$.

## FIG. 1
### (PRIOR ART)

| | COMPRESSOR | | DECOMPRESSOR |
|---|---|---|---|
| $t_0$ | HDR(n) | $\longrightarrow$ | HDR(n) |
| $t_1$ | HDR(n+1) | $\dashrightarrow$ | LOST |
| | HDR(n+2) | $\dashrightarrow$ | LOST |
| | $\vdots$ | | |
| | HDR($2^k$-1) | $\dashrightarrow$ | LOST |
| | HDR(0) | $\dashrightarrow$ | LOST |
| | HDR(1) | $\dashrightarrow$ | LOST |
| | $\vdots$ | | |
| $t_2$ | HDR(n) | $\dashrightarrow$ | LOST |
| $t_3$ | HDR(n+1) | $\longrightarrow$ | HDR(n+1) |

## FIG. 19

RECEIVER

T0: PACKET(NT0)

T1: ACK(NT0)

T2: F0(NT2, NT0)

T3: RECEIVING

# FIG. 2

# FIG. 3

COMPRESSION CONTEXT
INFORMATION

HEADER(n) TO BE
COMPRESSED

COMPRESSION
ALGORITHM

COMPRESSED HEADER(n)

# FIG. 4

DECOMPRESSION CONTEXT
INFORMATION

HEADER(n) TO BE
DECOMPRESSED

DECOMPRESSION
ALGORITHM

DECOMPRESSED HEADER(n)

## FIG. 6

COMPRESSOR

DECOMPRESSOR

t0      FH(n)

FH(n + 1)

t1      FH(n + i)

ACK(n)

FH(n + i + 1)

t2      FO(n + j)

# FIG. 7

COMPRESSOR                                    DECOMPRESSOR

t0          FO(n)

            FO(n + 1)

                                                    ACK(n)

t1          FO(n + i)

            FO(n + i + 1)                           ACK(n + 1)

t2          SO(n + j)

EP 1 926 282 B1

# FIG. 8

| | COMPRESSOR | | DECOMPRESSOR | TIMER |
|---|---|---|---|---|
| $t_0$ | HDR(n) | $\longrightarrow$ | HDR(n) | $t_s$ |
| $t_1$ | HDR(n+1) | $\dashrightarrow$ | LOST | $\sim t_s + t$ |
| | HDR(n+2) | $\dashrightarrow$ | LOST | $\sim t_s + 2t$ |
| | $\vdots$ | | | |
| | HDR($2^k$-1) | $\dashrightarrow$ | LOST | |
| | HDR(0) | $\dashrightarrow$ | LOST | |
| | HDR(1) | $\dashrightarrow$ | LOST | |
| | $\vdots$ | | | |
| $t_2$ | HDR(n) | $\dashrightarrow$ | LOST | $\sim t_s + 2^k t$ |
| $t_3$ | SO(n+1) | $\longrightarrow$ | HDR(n+1) | $t_e \approx$ $t_s + (2^k + 1)t$ |

EP 1 926 282 B1

# FIG. 9

COMPRESSOR

DECOMPRESSOR

ACK(n)

ACK($n + 2^k + $ N_RT) LOST

t0  SO($n + i$) (k_bit)

SO($n + i + 1$) (k_bit)

$\vdots$

t1  (EXPECTING ACK)

SO($n + i + 2^k + $ N_RT) ($\ell$ EXTENDED BITS)

SO($n + i + 2^k + $ N_RT $+ 1$) ($\ell$ EXTENDED BITS)

$\vdots$

ACK($n + i + 2^k + $ N_RT)

$\vdots$

t3  SO($n + j$) (k_bit)

# FIG. 10

COMPRESSOR                                    DECOMPRESSOR

t0        FH(0)

          FO(1)

          FH(2)

          FO(3)                                    ACK(0)

          FH(4)                                    ACK(1)

          FO(5)

          FH(6)

          FO(7)

t1        FO(8)

          SO(9)

           .
           .
           .

EP 1 926 282 B1

# FIG. 14A  1. SO Packet　　　　( PT = 0 )

| PT | C_RTP_SN | Payload |
|----|----------|---------|

# FIG. 14B  2. ACK Packet　　　　( PT = 10 )

| PT | C_RTP_SN |
|----|----------|

# FIG. 14C  3. FO Packet　　　　( PT = 110 )

| PT | C_RTP_SN | M | T | I | C_RTP_TS | C_IP_ID | Payload |
|----|----------|---|---|---|----------|---------|---------|

M – Marker Bit in the RTP Header (1 bit)
T – Flag which is set to 1 if C_RTP_TS is present, 0 otherwise (1 bit)
I – Flag which is set to 1 if C_IP_ID is present, 0 otherwise (1 bit)

# FIG. 14D  4. FH Packet　　　　( PT = 1110 )

| PT | IP_Hdr* | UDP_Hdr* | RTP_Hdr | Payload |
|----|---------|----------|---------|---------|

* The length fields in IP and UDP header in FH packets can be replaced with header compression information, assuming the packet length is provided by the lower layer at the decompressor side.

EP 1 926 282 B1

# FIG. 14E

### 5. FO_EXT Packet     ( PT = 11110 )

| PT | C_RTP_SN | M | C_RTP_TS | C_IP_ID | Bit Mask | Field Values | Payload |
|----|----------|---|----------|---------|----------|--------------|---------|

- FO_EXT packet will be transmitted only if one or several non-essential fields have changed The Bit Mask is used to indicate which fields are present in this packet.
- C_RTP_TS and C_IP_ID will be always present in a FO_EXT packet. Therefore, T and I bit-flag are not necessary.

# IG. 14F

### 6. FH_REQ Packet     ( PT = 111110 )

| PT |
|----|

Full header request packet will be sent only under exceptional situations, e.g., system crash

EP 1 926 282 B1

# FIG. 15

COMPRESSOR                                    DECOMPRESSOR

FH(n) OR FO(n)

FH(n +1) OR FO(n +1)                                    ACK(n)

⋮

⋮

FH(n +i)  OR FO(n +i)

FO(n +i +1) OR SO(n +i +1)

EP 1 926 282 B1

FIG. 16

## FIG. 17

EP 1 926 282 B1

COMPRESSOR                                                      DECOMPRESSOR

FH(n) OR FO(n)

FH(n +1) OR FO(n +1)

⋮

⋮

FH(n +m-1) OR FO(n +m-1)                                        ACK(n + j)*

FO(n + m) OR SO(n +m )

FO(n + m+1) OR SO(n +m +1)

*j > = 0

# FIG. 18

COMPRESSOR                                                    DECOMPRESSOR

FH(n) OR FO(n)

FH(n +1) OR FO(n +1)

⋮

⋮

FH(n +i) OR FO(n +i)

FO(n +i +1) OR SO(n +i +1)

# FIG. 20

60 ms ONE-WAY DELAY

COMPRESSION RATIO

PACKET ERROR RATE (%)

Legend:
- R FC2508
- INVENTION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 091377913 A

**Non-patent literature cited in the description**

- **S. CASNER ; V. JACOBSON.** Compressing IP/UDP/RTP Headers for Low Speed Serial Links. *Internet Engineering Task Force,* February 1999